# EUROPÄISCHE PATENTSCHRIFT

(11) **EP 2 864 814 B1**
(45) Veröffentlichungstag und Bekanntmachung des Hinweises auf die Patenterteilung: **21.04.2021**
(21) Anmeldenummer: 13739178.5
(22) Anmeldetag: 09.07.2013
(51) Int. Cl.: G01T 1/24

(54) **DETEKTION VON RÖNTGENSTRAHLUNG UND RÖNTGENDETEKTORSYSTEM**
DETECTION OF X-RAY RADIATION AND X-RAY DETECTION SYSTEM
DÉTECTION DE RAYONNEMENT X ET DISPOSITIF DE DÉTECTION

(30) Priorität: 31.07.2012 DE 102012213494
(43) Veröffentlichungstag der Anmeldung: 29.04.2015
(73) Patentinhaber: Siemens Healthcare GmbH, 91052 Erlangen (DE)
(72) Erfinder: GÖDERER, Edgar, 91301 Forchheim (DE); NIEDERLÖHNER, Daniel, 91054 Erlangen (DE); STRASSBURG, Matthias, 9020 Klagenfurt (AT); WIRTH, Stefan, 91056 Erlangen (DE); HACKENSCHMIED, Peter, 90425 Nürnberg (DE); KAPPLER, Steffen, 91090 Effeltrich (DE); KREISLER, Björn, 91353 Hausen (DE); LABAYEN DE INZA, Miguel, 91301 Forchheim (DE); REINWAND, Mario, 96151 Breitbrunn (DE); SCHRÖTER, Christian, 96050 Bamberg (DE)
(86) Internationale Anmeldenummer: PCT/EP2013/064495
(87) Internationale Veröffentlichungsnummer: WO 2014/019818

(56) Entgegenhaltungen:
- EP-A2- 1 394 567
- WO-A2-2006/064403
- WO-A2-2006/064403
- DE-A1- 10 247 985
- JP-A- H10 186 045
- JP-A- H10 186 045
- JP-A- 2009 011 526
- JP-A- 2009 011 526
- KR-B1- 101 042 046
- KR-B1- 101 042 046
- US-A1- 2007 034 806

## Beschreibung

Die Erfindung betrifft ein Verfahren zur Detektion von Röntgenstrahlung, einen Röntgendetektor, ein Röntgendetektorsystem und ein Computertomographiesystem, mit einem direktkonvertierenden Halbleiterdetektorelement zur Detektion von Röntgenstrahlung.

Zur Detektion von Röntgenstrahlung sind unterschiedliche Detektorsysteme bekannt. Um beispielsweise im Bereich der Computertomographie auftretende Flussdichten von Röntgenstrahlung erfassen zu können, finden Szintillationsdetektoren breite Anwendung. Szintillationsdetektoren konvertieren Röntgenstrahlung zunächst photochemisch in Lichtquanten, die eine geeignete Energie aufweisen, um beispielsweise die Detektion der Lichtquanten mit Hilfe einer Halbleiterdiode (Photodiode) zu ermöglichen.

Aus der KR 101 042 046 B1 ist ein digitales bildgebendes Röntgengerät bekannt, wobei das Röntgengerät eine bildgebende Vorrichtung zur Erzeugung des Bildes aufweist, mindestens eine Seite der bildgebenden Vorrichtung mit einer rückseitigen Beleuchtung zur Aussendung einer modulierbaren Lichtmenge ausgestattet ist und eine Kontrolleinheit für die einfallende Röntgenstrahlung umfasst wird. Die Kontrolleinheit kontrolliert die Menge der flächenhaften rückseitigen Beleuchtung basierend auf dem Helligkeitswert des in der bildgebenden Vorrichtung generierten Bildes.

Aus der JP 2009 011526 A ist ein diagnostisches Röntgengerät bekannt, wobei das Röntgengerät eine Spannungskontrolleinheit aufweist, welche den optimalen Spannungswert der Rückseitenbeleuchtung basierend auf den Bildgebungsbedingungen bestimmt, wobei die Bildgebungsbedingungen von einer Einstelleinheit basierend auf einer Korrekturtabelle mit Spannungswerten der Bildgebungsbedingung eingestellt werden.

Aus der JP H10 186045 A ist ein Strahlungsdetektor für zerstörungsfreie Röntgenbildgebung bekannt, welche in einem medizinischen oder industriellen Umfeld angewendet werden kann. Der Strahlungsdetektor weist einen photoelektrischen Konverter auf, wobei die optische Eingangs-Ausgangs-Charakteristik zur Durchführung der Kalibration des Bildes verwendet wird.

Aus der WO 2006/064403 A2 ist eine bildgebendes Röntgengerät bekannt, welches eine erste Strahlungsquelle aufweist und wobei deren Strahlen auf die Untersuchungsregion einstrahlen. Ein Detektor wandelt detektierte Strahlung, welche die Untersuchungsregion passiert hat, in elektrische Detektorsignale als Maß für die detektierte Strahlung um. Der Detektor weist mindestens einen temporär variierenden Parameter auf, beispielsweise ein Offset oder ein Verstärkungsfaktor. Ein gittergepulsende Vorrichtung schaltet die erste Strahlungsquelle mit einer Rate zwischen 1000 und 5000 Pulsen pro Sekunde ein und aus, sodass zumindest der Offset 1000 bis 5000 Mal pro Sekunde wiederholt gemessen und mehrmals während der Erzeugung der Detektorsignale korrigiert wird. Der Verstärkungsfaktor wird mit Hilfe einer zweiten gepulsten Quelle mit einer konstanten Intensität gemessen. Der Verstärkungsfaktor wird während der Erzeugung der Detektorsignale mehrmals pro Sekunde wiederholt gemessen und korrigiert.

Aus der Druckschrift EP 1 394 567 A2 ist ein Strahlungsdetektor zur Detektion einer räumlichen Verteilung von einfallender Strahlung bekannt, welcher einen strahlungssensitiven Halbleiter, eine auf einer Seite des Halbleiters ausgebildete gemeinsame Elektrode zum Anlegen einer Vorspannung, eine Mehrzahl von auf der anderen Seite des Halbleiters ausgebildeten aufgeteilten Elektroden zur Ausgabe von im Halbleiter durch die einfallende Strahlung generierten Ladungen als elektrische Signale, und ein Beleuchtungsmechanismus zum zumindest während der Detektion von Strahlung Emittieren von Licht aufweist.

Die Druckschrift US 2007/034806 A1 offenbart einen Festkörperdetektor, welcher lichtsensitive Pixelelemente in einer Matrixanordnung und eine Lichtquelle für ein Rücksetzlicht in Form einer Matrix an lichtemittierenden Dioden aufweist, deren Intensität im Falle eines Defekts und/oder einer Fehlfunktion einzelner Dioden individuell gesteuert werden kann, so dass die Intensität und/oder die Homogenität der Rücksetzlichtquelle konstant bleibt.

Die Druckschrift DE 102 47 985 A1 offenbart eine Diagnoseeinheit für einen Röntgendetektor zur Selbstüberwachung, wobei für die Diagnose unter anderem Rücklichtbilder durch Bestrahlung mit einer Rücklichtanordnung erzeugt werden.

Ferner wird zur Computertomographie die Verwendung sogenannter direktkonvertierender Halbleiterdetektorelemente angestrebt, welche Röntgenstrahlung ohne vorherige Energiewandlung in dem Halbleitermaterial absorbieren. In dem Halbleiterdetektorelement werden dabei sogenannte Elektronen-Loch-Paare erzeugt. Es ist zu betonen, dass der Begriff "direktkonvertierend" im Rahmen der vorliegenden Erfindung nicht die Art der Absorption von Röntgenquanten in dem Halbleitermaterial einschränkt. Obwohl die Bezeichnung eine abweichende Vermutung nahe legt, können "direktkonvertierende Halbleiterdetektorelemente" sowohl sogenannte direkte als auch indirekte Absorption von Röntgenquanten ermöglichen (phononenunterstützte Absorption). Wesentlich für den Begriff des "direktkonvertierenden Halbleitermaterials" ist, dass ein Röntgenquant in dem Halbleitermaterial absorbiert wird, also der Umweg über eine vorherige photochemische Wandlung der Röntgenstrahlung im Unterschied zu einem Szintillationsdetektor vermieden wird.

In Abhängigkeit von der Energie der absorbierten Röntgenstrahlung wird eine bestimmte Menge an freien Ladungsträgern in dem Halbleiterdetektorelement erzeugt. Dabei erhält ein normalerweise gebundenes Elektron des Valenzbandes des Halbleiters bei Absorption von Röntgenstrahlung wenigstens soviel Energie, dass es die Bandlücke des verwendeten Halbleitermaterials wie erwähnt direkt oder indirekt überwinden kann und im Leitungsband des Halbleiters quasi "frei beweglich" (dem Fachmann sind die entsprechenden Transportmechanismen im Halbleiter bekannt) zur Leitung eines Stromes beitragen kann. Im Valenzband bleibt eine Elektronenfehlstelle, die auch als Loch bezeichnet wird, zurück, welche im Valenzband ebenfalls "beweglich" ist, sodass auch die erzeugte Elektronenfehlstelle zur Leitung eines Stromes beitragen kann. Jedoch kann sich die Drift- oder Diffusionsgeschwindigkeit zwischen Elektronen und Löchern drastisch unterscheiden.

Bringt man die frei beweglichen Ladungsträger in den Einfluss eines elektrischen Feldes - beispielsweise durch Feldelektroden, die mit dem Halbleiterdetektorelement verbunden sind, und durch Anlegen einer Spannung - so resultiert aufgrund der Verfügbarkeit der frei beweglichen Ladungsträger ein Photostrom. Durch Bewertung der Pulsform der Ladungsträgerpakete (insbesondere der Pulshöhe) ist die Bestimmung der Anzahl und der Energie der absorbierten Röntgenquanten bzw. der absorbierten Röntgenstrahlung möglich.

Die für den Ladungstransport der beweglichen Ladungsträger im Halbleiter und damit die für die Pulsform entscheidenden Mechanismen Drift und Diffusion werden durch die Beweglichkeit (Mobilität µ) der freien Ladungsträger beschrieben. Insbesondere der Drift hängt dabei auch von dem bereits erwähnten elektrischen Feld ab.

Insbesondere wird die Verwendung von direkt konvertierenden Halbleiterdetektorelementen auf CdTE, CdZnTe, CDZnTeSe, CdMn-Te, InP, TlBr₂, HgI₂ Basis angestrebt. Nachteilig bei diesen Detektormaterialien ist jedoch, dass darin unerwünscht das elektrische Feld in dem Halbleitermaterial und damit die Pulsform des Photostromes variieren kann. Diese Materialien weisen in für die Detektion von Röntgenstrahlung relevanten Zeitskalen ortsfeste Störstellen, sogenannte "Traps", in unerwünschter Anzahl auf. Diese Traps können frei bewegliche Elektronen des Leitungsbandes bzw. Löcher des Valenzbandes einfangen und ortsfest für eine gewisse Zeit an die Störstelle binden. Ferner stellen diese Störstellen in besetztem oder unbesetztem Zustand Raumladungen dar. Diese Ausbildung von Raumladungen wird als Polarisationseffekt, kurz als Polarisation, des Halbleiterdetektorelements bezeichnet.

Nachteilig an den beschriebenen Effekten ist, dass die Ausbildung von Raumladungszonen aufgrund der Traps bzw. auch der Ladungsträgereinfang zeitlich in Abhängigkeit der Anzahl der unbesetzten bzw. besetzten Traps variiert. Das elektrische Feld in dem Halbleitermaterial und die resultierende Pulsform des Photostromes kann somit abhängig vom zeitlichen Abstand von Absorptionsereignissen sein, sodass identische Absorptionsereignisse u. U. nicht reproduzierbar bewertet werden und ein sogenannter Zählratendrift auftritt. D.h. die Zählrate von Röntgenquanten für eine zeitlich konstante Strahlungsdichte ändert sich zeitlich. Somit ist u. U. keine eindeutige Rückrechnung auf Energie, bzw. Anzahl der absorbierten Röntgenquanten möglich, sodass diese Detektoren für den verlässlichen Einsatz in Bildgebungsanwendungen, wie beispielsweise der Computertomographie nur mit erheblichem Aufwand nutzbar sind.

Um die angesprochenen Polarisationseffekte zu mildern, und insbesondere die zeitabhängige Veränderung der Polarisation während der Detektion von Röntgenstrahlung zu dämpfen, kann das Halbleiterdetektorelement bestrahlt werden.

Die Polarisation kann dann verändert werden, wenn die Störstellen mit einem korrespondierenden Ladungsträger besetzt sind aber auch wenn eine unbesetzte Störstelle erzeugt wird. Dazu kann eine Lichtquelle benutzt werden, deren Strahlung Ladungsträger in dem Halbleiter erzeugt, welche dann über einen relativ langen Zeitraum an die Störstelle gebunden sein können. Eine solche Störstelle wird auch als gesättigte Störstelle bezeichnet, die im Gegensatz zu einer ionisierten Störstelle als quasi ladungsneutral betrachtet werden kann.

Damit wird die Ausbildung von Raumladungszonen verändert, und insbesondere kann diese auch stabilisiert werden. Das Halbleiterdetektorelement kann dadurch so konditioniert werden, dass eine eindeutige Rückrechnung auf die Energie bzw. Zählrate möglich ist.

Um eine verlässliche, eindeutige Detektion von Röntgenstrahlung insbesondere für Bildgebungsanwendungen zu ermöglichen, ist es weiterhin notwendig, dass die Konditionierung ebenfalls eindeutig erfolgt, d. h. dass das Halbleiterdetektorelement eine definierte Konditionierung aufweist.

Aufgabe der vorliegenden Erfindung ist, reproduzierbar bzw. eindeutig Röntgenstrahlung zu detektieren, sodass die Bewertung der detektierten Röntgenstrahlung beispielsweise den Anforderungen für Röntgenbildgebung genügt bzw. die Möglichkeiten zur Röntgenbildgebung verbessert.

Diese Aufgabe wird mit einem Verfahren zur Detektion von Röntgenstrahlung nach Anspruch 1, einem Röntgendetektorsystem nach Anspruch 13, einem Röntgendetektor nach Anspruch 17 und einem Computertomographiesystem nach Anspruch 18 gelöst.

Erfindungsgemäß wird ein Verfahren zur Detektion von Röntgenstrahlung mit einem Röntgendetektor, welcher ein direktkonvertierendes Halbleiterdetektorelement aufweist, vorgeschlagen, bei dem dem Halbleiterdetektorelement mit Hilfe einer Strahlungsquelle zusätzliche (d.h. zusätzlich zur zu detektierenden Röntgenstrahlung) Strahlung zugeführt wird.

Wie bereits eingangs erläutert, betrifft der Begriff "direktkonvertierend" ein Halbleiterdetektorelement, welches zu detektierende Röntgenstrahlung einer Röntgenstrahlungsquelle wenigstens teilweise absorbiert und basierend auf der absorbierten Röntgenstrahlung ein Detektionssignal, d.h. insbesondere einen Detektionspuls erzeugt. Dazu kann das Halbleiterdetektorelement mehrere Feldelektroden umfassen, die ein elektrisches Feld in das Halbleiterdetektorelements einprägen, und so einen oder mehrere Detektionsbereiche festlegen, die jeweils einen Pixel des Röntgendetektors bilden.

Die erfindungsgemäß zugeführte zusätzliche Strahlung dient dabei zur eingangs bereits beschriebenen Konditionierung des Halbleiterdetektorelements und bevorzugt zur Veränderung von ebenfalls eingangs beschriebenen Polarisationseffekten in dem Halbleiterdetektorelement, und besonders bevorzugt zur Veränderung des elektrischen Feldes (und ggf. der freien Weglänge von Ladungsträgern) in dem Halbleiterdetektorelement. Insofern kann diese zusätzliche Strahlung im Folgenden auch als "Konditionierungsstrahlung" bezeichnet werden.

Die Zuführung - bzw. indirekt die Abgabe - der zusätzlichen Strahlung bzw. Konditionierungsstrahlung wird erfindungsgemäß basierend auf wenigstens einem vorgegebenen Sollwert gesteuert oder auch geregelt.

Mit Hilfe des erfindungsgemäßen Sollwerts kann beispielsweise auf verlässliche Art und Weise vorgegeben werden, wie das Halbleiterdetektorelement konditioniert ist bzw. und bevorzugt auch wie das Halbleiterdetektorelement zukünftig für eine durchzuführende Röntgendetektionsmessung konditioniert werden soll. Dem liegt insbesondere die Erkenntnis zu Grunde, dass es ausreicht, die Konditionierung, d.h. insbesondere die Polarisation oder auch die Kompensation der Polarisation, zu kennen, um einen eindeutige Detektion von Röntgenstrahlung zu ermöglichen.

Das kann insbesondere auch bedeuten, dass mit Hilfe des Sollwerts die Konditionierung den Anforderungen einer bestimmten Röntgendetektionsmessung angepasst wird. D.h. dass der Sollwert für verschiedene zeitlich unterschiedliche Röntgendetektionsmessungen variabel ist oder auch während einer Röntgendetektionsmessung verändert wird. Beispielsweise kann eine bestimmte Empfindlichkeit des Detektors notwendig oder ausreichend sein, die durch eine maximale Zählrate gegeben ist. Mit Hilfe des Sollwerts, beispielsweise einer Zählrate, kann dann vorgegeben oder auch festgestellt werden, ob das Halbleiterdetektorelement entsprechend konditioniert ist, um diese maximale Zählrate zu erreichen. Ist dies nicht der Fall, oder ist eine geringere Empfindlichkeit ausreichend, kann die Zuführung der Konditionierungsstrahlung entsprechend gesteuert oder auch geregelt werden, bis ein gewünschter neuer Sollwert, beispielsweise der maximalen Empfindlichkeit, erreicht wird. Ausgehend von einem Zustand, in dem mit einem aktuellen Sollwert gesteuert bzw. geregelt wird, kann ein angestrebter neuer Sollwert im Folgenden auch als "Zielwert" bezeichnet werden.

Bei dem Sollwert kann es sich insbesondere um einen Sollmesswert handeln, also um einen Wert, der direkt gemessen oder direkt aus einer Messung abgeleitet wurde.

Beispielsweise kann dies mit Hilfe eines Sollwerts und insbesondere eines Sollmesswerts aus der Gruppe der Größen Zeit, insbesondere Dauer oder auch Zeitpunkt der Zuführung der Konditionierungsstrahlung bzw. Röntgenstrahlung, Betriebsdauer des Röntgendetektors, Strahlungsintensität (bzw. Strahlungsdichte, Zählrate, Dosis), insbesondere der Konditionierungsstrahlung bzw. der Röntgenstrahlung, erreicht werden.

Bevorzugt könnte eine später noch genauer beschriebene Kalibrierung mit Hilfe des Sollwerts durchgeführt und die Zuführung der Konditionierungsstrahlung auf Basis der erfolgten Kalibrierung beispielsweise auf Basis von mehreren Zielwerten (d.h. sukzessive anzufahrenden neuen Sollwerten) gesteuert oder auch geregelt werden. Dabei ist zu betonen, dass es im einfachsten Fall für Röntgenbildgebungsanwendungen ausreichen kann, eine Steuerung auf Basis des Sollwerts ohne weitere Rückkopplung von Messwerten zur Steuerung vorzunehmen. D.h. dass einmalig ein oder mehrere Sollwerte vorgegeben bzw. Sollmesswerte erfasst werden und anschließend die Steuerung ohne die Überprüfung von weiteren Messwerten erfolgen kann.

Mit Hilfe des Sollwerts kann dann beispielsweise die Zuführung der Kompensationsstrahlung so gesteuert oder auch geregelt werden, dass Alterungseffekte des Halbleiterdetektors bzw. auch der Strahlungsquelle bewertet und ggf. mittels der erfindungsgemäßen Steuerung bzw. Regelung kompensiert werden. Bevorzugt kann die Erzeugung zeitlich invarianter (d.h. wenigstens für die Dauer einer durchzuführenden Messsequenz bzw. Röntgendetektionsmessung) Detektorempfindlichkeiten beispielsweise mit Hilfe von zeitlich invarianter Kompensationsstrahlung angestrebt werden. Es kann bevorzugt auch die Verteilung von Raumladungen in dem Halbleitermaterial durch zusätzliche Erzeugung von freien Ladungsträgern mittels der zusätzlichen Strahlung zeitlich konstant gehalten werden. Darüber hinaus ist aber auch die Konditionierung des Halbleiterdetektorelements hinsichtlich bestimmter Messbedingungen, wie z.B. Temperatur, Feuchtigkeit, Laufzeit, Stromaufnahme des Halbleiterdetektorsystems mit Hilfe des Sollwerts möglich, so dass diese Parameter ebenfalls in der Steuerung bzw. Regelung der Zuführung der Konditionierungsstrahlung berücksichtigt werden, d.h. dass die Steuerung und oder Regelung als Funktion dieser Parameter durchgeführt wird bzw. im Sollwert umfasst sind.

Besonders bevorzugt umfasst das Verfahren einen Schritt zur Festlegung bzw. Vorgabe eines Sollwertes, sodass der Sollwert variabel ist und die Variation insbesondere mit mehreren Zielwerten erfolgen kann. Wie erwähnt, kann der Sollwert variabel insbesondere innerhalb einer Messsequenz bzw. einer Röntgendetektionsmessung (d.h. für eine zeitlich zusammenhängende Dauer, in der eine Detektion von Röntgenstrahlung erfolgen soll) oder auch variabel für unterschiedliche Messsequenzen bzw. Röntgendetektionsmessungen vorgegeben werden.

Die Steuerung oder auch die Regelung der Zuführung der zusätzlichen Strahlung bzw. Konditionierungsstrahlung erfolgt zeitlich und/oder hinsichtlich der Strahlungsdichte bzw. Strahlungsintensität oder Dosis. Ferner kann die Steuerung bzw. Regelung auch hinsichtlich der Energie der Konditionierungsstrahlung erfolgen. Diese Parameter werden in Steuerungs- oder auch Regelgrößen abgebildet, wie beispielsweise einem Ansteuerungsstrom für eine Strahlungsquelle. Bei Veränderung von Steuerungs- und/oder Regelungswerten, die entsprechenden Steuerungs- bzw. Regelungsgrößen zugeordnet sind, ändert sich auch die Zuführung der Konditionierungsstrahlung. Beispielsweise wird bei Reduzierung der Stromstärke des Ansteuerungsstroms eine Strahlungsquelle gedimmt, so dass die Intensität der zugeführten Konditionierungsstrahlung gemindert wird.

D.h. die Steuerung oder auch Regelung der Zuführung der Konditionierungsstrahlung kann beispielsweise auch die Regelung oder auch Steuerung der Abgabe der Strahlung der Strahlungsquelle umfassen.

Besonders bevorzugt kann die erwähnte Strahlungsquelle, hinsichtlich eines, mehrerer oder bevorzugt aller o.g. Parameter gesteuert werden. D. h. für die Strahlungsquelle können mehrere Betriebszustände auf Basis von Steuerungswerten oder auch Regelungswerten hinsichtlich dieser Parameter eingestellt werden, die sich von einem bloßen Ein- bzw. Ausschalten der Strahlungsquelle unterscheiden. Dabei können mehrere unterschiedliche Werte (d.h. die Steuerungs- bzw. Regelungswerte) für die Steuerungs- oder Regelungsgrößen eingestellt werden. Durch die Berücksichtigung einer oder mehrerer dieser Steuerungs- oder auch Regelgrößen ist es möglich, die Konditionierung des Halbleiterdetektorelements, wie erwähnt, an verschiedenste Anforderungen anzupassen, die später noch genauer erläutert werden.

Im Rahmen der Erfindung wird dementsprechend ein Röntgendetektorsystem mit einem Röntgendetektor zur Erfassung von Strahlung einer Röntgenquelle vorgeschlagen. Der Röntgendetektor weist ein direktkonvertierendes Halbleiterdetektorelement auf, d.h. das Detektorelement absorbiert die zu detektierende Röntgenstrahlung einer Röntgenstrahlungsquelle wenigstens teilweise und erzeugt basierend auf der absorbierten Röntgenstrahlung ein Detektionssignal. Insbesondere ist der Detektor zur Anwendung in der Röntgenbildgebung, beispielsweise in einem Computertomographiesystem, einem SPECT-System oder einem PET-System geeignet.

Das erfindungsgemäße Röntgendetektorsystem umfasst eine Strahlungsquelle zur Zuführung von zusätzlicher Strahlung zu dem Halbleiterdetektorelement und/oder eine Steuerschnittstelle, zur Ansteuerung einer Strahlungsquelle. Die Steuerschnittstelle kann dann beispielsweise dazu verwendet werden, um bereits in einer Röntgenanlage (insbesondere einem Computertomographiesystem), zu dem der Detektor gehört, vorhandene geeignete Strahlungsquellen zur Zuführung der Konditionierungsstrahlung direkt oder indirekt (über eine andere vorhandene Steuerungseinheit) anzusteuern. Beispielsweise kann es sich um die bereits vorhandene Röntgenquelle eines Computertomographiesystems handeln.

Ferner weist das Röntgendetektorsystem eine Steuerungseinheit auf, welche auf Basis eines vorgegebenen Sollwerts die Zuführung der zusätzlichen Strahlung steuert oder auch regelt. Dabei ist zu betonen, dass der Begriff "Steuerungseinheit" im Folgenden nicht nur die Möglichkeit des Steuerns der Zuführung der Kompensationsstrahlung einschließt, sondern ebenfalls die Möglichkeit beinhalten kann, die Zuführung der Kompensationsstrahlung zu regeln.

Wie bereits angedeutet, kann der Sollwert variabel sein. Besonders bevorzugt weist die Steuerungseinheit deshalb eine Eingangsschnittstelle zur Vorgabe des Sollwerts auf, sodass dieser, veränderbar mit Hilfe der Eingangsschnittstelle, jeweils für eine gesamte Messsequenz oder auch innerhalb einer Messsequenz vorgeben werden kann.

Weitere, besonders vorteilhafte Ausgestaltungen und Weiterbildungen der Erfindung ergeben sich aus den abhängigen Ansprüchen sowie der nachfolgenden Beschreibung, wobei die unabhängigen Ansprüche einer Anspruchskategorie auch analog zu den abhängigen Ansprüchen einer anderen Anspruchskategorie weitergebildet sein können.

In einer Weiterbildung des erfindungsgemäßen Verfahrens umfasst die Strahlungsquelle wenigstens eine Komponente aus der Gruppe: UV-Lichtquelle, Infrarotlichtquelle und Lichtquelle für sichtbares Licht. Die Lichtquelle umfasst bevorzugt eine oder mehrere Leuchtdioden. Bei den mehreren Leuchtdioden kann es sich auch um ein sogenanntes Leuchtdioden-Cluster handeln. Sowohl die Leuchtdiode bzw. auch das Leuchtdioden-Cluster kann in der Intensität bzw. Strahlungsdichte oder auch der spektralen Verteilung der Strahlung bzw. der Wellenlänge des abgegebenen Lichts gesteuert oder auch geregelt werden. Bei mehreren Lichtquellen kann die erfindungsgemäße Steuerung und/oder Regelung insbesondere auch die Auswahl einer oder mehrerer Strahlungsquellen aus einer Anzahl von vorhandenen Strahlungsquellen umfassen.

Ferner kann die Steuerung und/oder Regelung beispielsweise die Steuerung einer Stromquelle, bevorzugt einer Gleichstromquelle, zur Ansteuerung der Leuchtdioden umfassen. Dies schließt jedoch nicht aus, dass auch Verfahren wie eine sogenannte Pulsbreitenmodulation zur Steuerung bzw. Regelung der Lichtquelle eingesetzt werden, und entsprechende Stromquellen auf Basis der Erfindung gesteuert werden. Bei der jeweiligen Lichtquelle kann es sich insbesondere auch um einen Laser, eine Halogenlampe, eine Leuchtstoffröhre oder ähnliche Lichtquellen handeln, welche gegebenenfalls mit einem Farbfilter oder einer Abschwächungseinrichtung, einer sogenannten Attenuatoreinrichtung kombiniert sind. Bei all diesen Lichtquellen kann es sich um eine wie erwähnt steuerbare bzw. regelbare Lichtquelle handeln.

Darüber hinaus ist nicht ausgeschlossen, dass es sich bei der Strahlungsquelle auch um die Röntgenstrahlungsquelle selbst handelt bzw. die Strahlungsquelle eine Röntgenstrahlungsquelle umfasst. Das heißt, die Röntgenquelle kann ebenfalls so gesteuert werden, dass eine Konditionierung des Halbleiterdetektorelements, basierend auf einem vorgegebenen Sollwert, erreicht wird. Insbesondere kann die Röntgenquelle zusätzliche Röntgenstrahlung als Konditionierungsstrahlung abgeben, die nicht zur Erzeugung einer Bildinformation verwendet wird. In diesem Fall kann beispielsweise die Steuereinheit mittels der erwähnten Steuerschnittstelle die Röntgenquelle zur Aussendung von Konditionierungsstrahlung ansteuern.

Um insbesondere eine Regelung der Zuführung der Konditionierungsstrahlung zu ermöglichen, umfasst das Verfahren vorzugsweise weiterhin einen Schritt, in dem ein zu dem Sollwert korrespondierender Überwachungsmesswert erfasst wird. Der Begriff korrespondierend bedeutet in diesem Zusammenhang, dass die Steuerung bzw. Regelung auf Basis einer Korrelation zwischen Sollwert und Überwachungsmesswert erfolgt. Beispielsweise kann es sich bei dem Sollwert um die Betriebszeit eines Detektorsystems handeln. In Abhängigkeit von der Betriebszeit kann dann beispielsweise eine Korrelation zu einer einzustellenden Bestrahlungsintensität der Strahlungsquelle ermittelt werden, sodass der Überwachungsmesswert die Intensität der zugeführten Konditionierungsstrahlung ist. Bevorzugt entspricht die Messgröße des Überwachungsmesswerts jedoch der Größe des Sollwerts. In diesem Fall können der Sollwert und der Überwachungsmesswert dann beispielsweise die Intensität der zugeführten Konditionierungsstrahlung betreffen.

Besonders bevorzugt kann das Röntgendetektorsystem zur Erfassung des Überwachungsmesswerts eine Überwachungseinheit aufweisen, die beispielsweise zu mehreren unterschiedlichen Zeitpunkten, insbesondere vor, während oder auch nach einer Erfassen von zu detektierender Röntgenstrahlung z.B. in einer Computertomographie-Messung einen Überwachungsmesswert ermittelt. Besonders bevorzugt weist die Steuerungseinheit dann eine Eingangsschnittstelle zum Empfang des Überwachungsmesswerts auf.

Besonders bevorzugt ist die Überwachungseinheit außerhalb eines Primärstrahlengangs der Röntgenquelle zu dem Halbleiterdetektorelement angeordnet, d. h. insbesondere an der Schmalseite eines im Wesentlichen flachen Halbleiterdetektorelements. Somit können beispielsweise Strahlenschäden an der Überwachungseinheit durch die Röntgenstrahlung gemindert bzw. unterdrückt werden.

Beispielsweise kann die Überwachungseinheit auch Abschirmungsmittel gegenüber der Strahlung der Röntgenquelle umfassen. Bevorzugt kann es sich um eine für Röntgenstrahlung stark absorbierende oder undurchlässige Beschichtung handeln. Z. B. kommen dafür Molybdän, Wolfram, Blei, Wismut und Platin oder ähnliche Materialien bzw. Beschichtungen in Frage, so dass es dennoch möglich ist, die Überwachungseinheit nahe dem Halbleiterdetektorelement zu positionieren.

Bevorzugt ist die Überwachungseinheit aus einem Material gefertigt, das besonders widerstandsfähig gegenüber Röntgenstrahlung ist. Vorzugsweise sind der Röntgendetektor und die Überwachungseinheit in das Röntgendetektorsystem integriert, so dass sich eine besonders kompakte Bauweise ergibt.

Insbesondere kann mit Hilfe der Überwachungseinheit die Abweichung des Überwachungsmesswerts zu einem Sollwert, insbesondere zu einem Zielwert, ermittelt werden und basierend auf dieser Abweichung die Zuführung der Konditionierungsstrahlung geregelt bzw. gesteuert werden. Bevorzugt kann eine gewünschte Strahlungsintensität durch den Sollwert bzw. Zielwert vorgegeben sein. Auf Basis der Abweichung des Überwachungsmesswerts zu der gewünschten Strahlungsintensität bzw. dem Sollwert, kann dann eine Steuerung bzw. Regelung der Zuführung der Konditionierungsstrahlung erfolgen.

In einer bevorzugten Ausführungsform weist eine Überwachungseinheit zur Erfassung des Überwachungsmesswerts wenigstens eine Komponente auf aus der Gruppe, welche Lichtsensor, Röntgensensor, Halbleiterdetektorelement des Röntgendetektors, Dosimeter, Thermometer, Luxmeter bzw. Auswerteelektronik des Röntgendetektors bzw. einen Zeitnehmer oder auch Zeitgeber umfasst. Mögliche Überwachungsmesswerte könnten dann beispielsweise die Lichtintensität, die Röntgenintensität, das Lichtspektrum, eine Zählrate des Röntgendetektors bzw. die Stärke bzw. Pulsform eines Photostroms, eine Temperatur, eine Strahlungsdichte oder auch eine Zeit bzw. einen Zeitpunkt umfassen.

Somit wird wiederum die Anpassung an verschiedenste Anforderungen zur Erfassung der Röntgenstrahlung ermöglicht. Insbesondere kann die Überwachungseinheit zusätzlich zu bereits vorhandenen Komponenten des Röntgendetektors, die zur Detektion von Röntgenstrahlung bzw. zur Durchführung von Röntgendetektionsmessungen notwendig sind, in dem Röntgendetektorsystem umfasst sein.

Die Steuerung bzw. Regelung kann auf Basis eines vorgegebenen Algorithmus erfolgen. Der Algorithmus berücksichtigt den vorgegebenen Sollwert und bevorzugt auch einen Zielwert, d.h. einen veränderten Sollwert. Beispielsweise kann eine Reglung auf Basis eines PID-Algorithmus (Proportional-Integral-Differential-Regelungsalgorithmus) erfolgen und die Steuerung bzw. Regelung kann auf Basis einer Look-Up-Tabelle oder Korrelationsfunktion erfolgen, die den Sollwerts in Beziehung zu einem Steuerungs- oder auch Regelungswert setzt, der die Zuführung der Konditionierungsstrahlung steuert bzw. regelt. Beispielsweise kann als Sollwert ein Intensitätswert der Konditionierungsstrahlung vorgegeben sein, dem dann über eine Look-Up-Tabelle oder eine Korrelationsfunktion ein Ansteuerungsstromwert für LEDs, welche als Strahlungsquelle dienen, zugeordnet ist. Die Steuerung oder auch Regelung erfolgt dann beispielsweise durch Veränderung des Ansteuerstromes auf Basis der Look-Up-Tabelle oder Korrelationsfunktion.

Darüber hinaus kann der Algorithmus aber auch einen oder mehrere weitere Eingangsparameter zur Steuerung und/oder Regelung der Zuführung der Konditionierungsstrahlung berücksichtigen, die beispielsweise auch über eine Eingangsschnittstelle der Steuerungseinheit übermittelt werden können.

Somit kann der Algorithmus in dieser Weiterbildung der Erfindung veränderbar vorgegeben werden. Die Steuerungseinheit umfasst dann bevorzugt einen oder mehrere Speicher, in welchem wenigstens Teile des veränderbaren Algorithmus, beispielsweise die Look-Up-Tabelle oder auch die Korrelationsfunktion, hinterlegt werden können. Besonders bevorzugt kann die Eingangsschnittstelle auch zur Übermittlung eines veränderten neuen Algorithmus an die Steuerungseinheit ausgebildet sein. Somit ist es beispielsweise möglich, eine Konditionierung des Halbleiterdetektorelements an unterschiedliche Anforderungen anzupassen, die insbesondere eine unterschiedliche Regelung bzw. Steuerung der Zuführung der Konditionierungsstrahlung mit Hilfe unterschiedlicher Regelungsalgorithmen erfordern.

In einer Weiterbildung des erfindungsgemäßen Verfahrens kann die Zuführung der zusätzlichen Strahlung, basierend auf der Beschaffenheit eines Untersuchungsobjekts, welches mit der zu detektierenden Röntgenstrahlung durchstrahlt wird, gesteuert oder auch geregelt werden. Beispielsweise könnte zur Computertomographie eine Topogramm-Messung herangezogen werden, um entsprechende Konditionierungen des Halbleiterdetektorelements vorzugeben. Bei einer Topogramm-Messung handelt es sich um eine schnell durchgeführte Übersichtsaufnahme, auf deren Basis beispielsweise ein geeignetes Messprotokoll für eine nachfolgende Computertomographie-Bildaufnahme oder Aufnahmesequenz ausgewählt wird. Insbesondere kann ein Sollwert basierend auf der Topogramm-Messung abgeleitet oder direkt extrahiert werden. Beispielsweise kann es sich bei dem abgeleiteten oder extrahierten Sollwert um eine maximale Zählrate oder eine maximale Empfindlichkeit des Detektorsystems handeln. Die Zuführung der Konditionierungsstrahlung kann dann beispielsweise durch Intensitätsvariation so gesteuert bzw. geregelt werden, dass besagte maximale Zählrate bzw. maximale Empfindlichkeit des Detektorsystems erreicht wird.

Wie bereits erwähnt, kann die Möglichkeit bestehen, mehrere Eingangsparameter in dem Algorithmus bzw. zur Steuerung und oder auch Regelung der Zuführung der Konditionierungsstrahlung zu berücksichtigen. Die Beschaffenheit des Untersuchungsobjekts bzw. ein oder mehrere der bzgl. des Sollwerts erwähnten abgeleiteten oder extrahierten Werte können in einer Weiterbildung der Erfindung auch in den Eingangsparametern des erwähnten Algorithmus berücksichtigt sein.

In einer Weiterbildung kann die Steuerung bzw. Regelung der Zuführung der Konditionierungsstrahlung auch auf dem Verlauf der Abgabe der Röntgenstrahlung durch die Röntgenstrahlungsquelle basieren. Somit ergibt sich die Möglichkeit, den Röntgendetektor bezüglich der tatsächlich vorherrschenden Messbedingungen zu konditionieren. Beispielsweise kann die Zuführung der zusätzlichen Strahlung auf Basis der Röntgenbestrahlungsintensität, des benutzten Spektrums, des Messprotokolls (hierbei handelt es sich bekanntermaßen um das Messprogramm, welches auf Basis vorgegebener Parameter eine Messung vollautomatisch steuert), einzelner bevorzugter Energien der Röntgenstrahlung, in Abhängigkeit eines Betriebsmodus des Geräts, in welches der Röntgendetektor eingebaut ist (beispielsweise passend zum Dual-Energy-Betrieb eines ComputertomographieSystems), festgelegt werden. Die Steuerung und Regelung kann insbesondere auf Basis des Verlaufs der Schwächung der Röntgenstrahlung durch das Untersuchungsobjekt erfolgen.

Die erwähnten Parameter können dabei als Sollwert oder auch als Eingangsparameter, beispielsweise bei der Berechnung einer Korrelationsfunktion oder zur Festlegung des Algorithmus, berücksichtigt sein.

Insbesondere kann der Verlauf der Zuführung der Konditionierungsstrahlung bei der Festlegung des Sollwerts berücksichtigt werden, so dass sich ausgehend von einer bekannten Konditionierung wiederum im Betrieb des Detektors eine flexible Konditionierung bezüglich unterschiedlichster Anforderungen ergibt.

Besonders bevorzugt wird die Zuführung der Konditionierungsstrahlung basierend auf einem Zählratendrift gesteuert und/oder geregelt. Der Zählratendrift betrifft, wie eingangs bereits erläutert, die zeitliche Änderung einer Zählrate des betreffenden Detektors bzw. Halbleiterdetektorelements bezüglich zu detektierender Röntgenstrahlung einer bekannten bzw. vorgegebenen Dosis, die insbesondere durch die zeitliche Varianz von Polarisationseffekten begründet sein kann. Somit kann der Sollwert, beispielsweise die Intensität oder auch das Spektrum der Konditionierungsstrahlung, basierend auf einem ermittelten Zählratendrift, festgelegt sein, der wiederum z.B. aus der Historie der bestimmten Zählraten, also der vorangegangenen Röntgendetektionsmessungen oder unterschiedlichen Konditionierungen mit Hilfe der Strahlungsquelle, bestimmt wurde.

Besonders bevorzugt kann die Zuführung der zusätzlichen Strahlung auf Basis einer oder mehrerer der folgenden Größen gesteuert oder auch geregelt werden: Bestrahlungszeit, eingebrachte Dosis, Detektionssignal, Gesamtbetriebszeit des Detektors, Stromaufnahme eines Halbleiterdetektorelements, Stromaufnahme einer Gruppe von Halbleiterdetektorelementen, Temperatur bzw. Feuchtigkeit. Das heißt, dass die Steuerung und/oder Regelung der Strahlungsdichte der Konditionierungsstrahlung beispielsweise in Abhängigkeit davon erfolgen kann, wie lange schon bestrahlt/konditioniert bzw. welche Dosis an Röntgenstrahlung und/oder Konditionierungsstrahlung dem Halbleiterdetektorelement in einem vorgegebenen Zeitabschnitt zugeführt wurde bzw. auf Basis der Umgebungsbedingungen wie Temperatur oder Feuchtigkeit, die ebenfalls die Polarisation bzw. Absorption von Röntgenstrahlung maßgeblich beeinflussen können. Die Stromaufnahme eines Halbleiterdetektorelements, bzw. die Stromaufnahme einer Gruppe von Halbleiterdetektorelementen kann ferner einen direkten Hinweis auf die Konditionierung des Halbleiterdetektorelements liefern.

Darüber hinaus können beispielsweise auch Größen bei der Festlegung des Sollwerts berücksichtigt werden, welche das Einbringen neuer Traps in das Halbleiterdetektormaterial beeinflussen. Dies kann auch mit Hilfe der Bewertung der Gesamtbetriebszeit des Detektors zur Festlegung des Sollwerts berücksichtigt werden. Beispielsweise kann auf Basis der Betriebszeit bzw. Gesamtbetriebszeit die Intensität und/oder Dauer der Konditionierung gesteuert und/oder geregelt werden. D.h. auf Basis der Größe Zeit wird eine Intensität und/oder Dauer ermittelt, die den Sollwert repräsentiert, und beispielsweise ein Ansteuerstromwert für die Strahlungsquelle und/oder eine Ansteuerzeit (Dauer) der Strahlungsquelle gesteuert und/oder geregelt.

Besonders bevorzugt erfolgt die Steuerung und/oder Regelung so, dass die zusätzliche Strahlung in einem Zeitfenster zugeführt wird, in dem die Röntgenstrahlungsquelle keine Röntgenstrahlung abgibt. So kann beispielsweise vor oder nach einer Röntgenmessung eine bestimmte Konditionierung des Halbleiterdetektorelements eingestellt werden. Insbesondere dann, wenn der Verlauf der Röntgenmessung so ist, dass kein zusätzlicher Drift der Zählrate zu erwarten ist, ist dies eine einfache Möglichkeit, die Konditionierung des Halbleiterdetektorelements festzulegen. Somit ergibt sich auch die Möglichkeit, einen Überwachungsmesswert in dem Zeitfenster der Zuführung der zusätzlichen Strahlung zu ermitteln, während immer dann, wenn die Röntgenstrahlungsquelle keine Röntgenstrahlung abgibt, auch kein entsprechender Überwachungsmesswert ermittelt wird.

Vorzugsweise wird die Zuführung der zusätzlichen Strahlung so gesteuert bzw. geregelt, dass die Intensität oder auch die spektrale Verteilung der zusätzlichen Strahlung insbesondere während eines gegebenen Messabschnitts, in dem die Röntgenstrahlung detektiert werden soll, im Wesentlichen konstant ist. Beispielsweise kann so sichergestellt werden, dass Alterungseffekte der Strahlungsquelle erkannt und kompensiert werden können und weiterhin eine verlässliche Rückrechnung auf Zählraten des Halbleiterdetektorelements erfolgen kann.

Insbesondere kann die konstante Zuführung der Konditionierungsstrahlung mit Hilfe der Erfassung von Überwachungsmesswerten überprüft werden.

Erfindungsgemäß wird die Zuführung der zusätzlichen Strahlung so gesteuert bzw. geregelt, dass die gemessene Stromaufnahme eines Halbleiterdetektorelements und/oder einer Gruppe von Halbleiterdetektorelementen des Röntgendetektors (wobei die Stromaufnahme durch die Summe der zusätzlichen Strahlung und der Röntgenstrahlung gegeben sein kann) während eines gegebenen Messabschnitts, in dem die Röntgenstrahlung detektiert werden soll, im Wesentlichen konstant ist. Im Wesentlichen konstant bedeutet dabei, dass ein von Null unterschiedliches Grundniveau der Stromaufnahme konstant ist, unabhängig davon, ob Röntgenstrahlung zugeführt wird oder nicht, und ausgehend von diesem Grundniveau, zusätzliche Strompulse bzw. Ladungspakete auf Basis der Röntgenstrahlung erzeugt werden, die das eigentliche Detektorsignal repräsentieren. Dies ist besonders sinnvoll, bei der Verwendung von später noch genauer beschriebenen quantenzählenden Röntgendetektoren, bei denen das von Null verschiedene Grundniveau unterhalb von Schwellenwerten liegt, welche ein Zählung auslösen. Dabei kann die Stromaufnahme eines einzelnen Halbleiterdetektorelements über oder um das Grundniveau jedoch nach wie vor mit der über die Röntgenstrahlung vermittelte Bildinformation variieren.

Die Erfindung wird im Folgenden unter Hinweis auf die beigefügten Figuren anhand von (in der Regel nur schematisch dargestellten) Ausführungsbeispielen noch einmal näher erläutert. Dabei sind in den verschiedenen Figuren gleiche Komponenten mit identischen Bezugsziffern versehen. Es zeigen:
- Figur 1: ein Ausführungsbeispiel eines Computertomographiesystem mit einem Röntgendetektorsystem und Röntgendetektor, welches gemäß einem Ausführungsbeispiel der Erfindung gesteuert bzw. geregelt wird,
- Figur 2: ein Ablaufschema eines Ausführungsbeispiels eines Verfahrens zur Detektion von Röntgenstrahlung, welches Kalibrierungsschritte und Betriebsschritte aufweist,
- Figur 3: ein Ausführungsbeispiel für die Steuerung von mehreren unterschiedlichen Lichtquellen, die hinsichtlich der Intensität und der spektralen Verteilung der abgegebenen Strahlung gesteuert oder auch geregelt werden können,
- Figur 4: ein Zeitschema, welches verschiedene Varianten für die zeitliche Steuerung der Zuführung von Konditionierungsstrahlung beschreibt,
- Figur 5: eine Steuerungseinheit zur Steuerung der Zuführung von Konditionierungsstrahlung, mit einer Eingangsschnittstelle, über die sowohl Sollwerte, Überwachungswerte als auch weitere Eingangsparameter an die Steuerungseinheit übermittelt werden können,
- Figur 6: ein Ausführungsbeispiel für die Bestimmung eines Sollwerts auf Basis der Beschaffenheit des Untersuchungsobjekts,
- Figur 7: ein Beispiel für den zeitlichen Verlauf eines Zählratendrifts,
- Figur 8: eine Möglichkeit zur Bestimmung des Sollwerts auf Basis des Messprogramms, und
- Figur 9: ein weiteres Zeitschema für die Abgabe von Konditionierungsstrahlung auf Basis variabler Sollwerte.

Wie eingangs erläutert, unterliegen Röntgendetektoren, im speziellen Detektoren für Computertomographiesysteme, die auf direkt wandelnden bzw. direkt konvertierenden Halbleitermaterialien wie z. B. dem Cadmiumtellurid oder Cadmium-Zink-Tellurid basieren, einer zeitlichen Instabilität in der Erzeugung eines Detektionssignals für Röntgenstrahlung. Insbesondere ändert sich das Detektionssignal bei eigentlich konstanter Anregung mit Röntgenstrahlung zeitlich. Dies ist unerwünscht und führt zu Artefakten in der Bildgebung, so dass diese Detektoren mit der aktuellen Performance gegenwärtig nur schwer in Bildgebungsverfahren auf Röntgenbasis eingesetzt werden können. Durch Beleuchtung des Halbleiterdetektormaterials können so viele freie Ladungsträger erzeugt werden, dass sich ein stabiler Zustand einstellt und der eingangs erläuterte Effekt der Polarisation neutralisiert bzw. stabilisiert werden kann. Dadurch kann ein zur Messung von Röntgenstrahlung benötigtes stabilisiertes Messsignal bzw. Detektorsignal gewährleistet werden, welches den Einsatz auch in der medizinischen Bildgebung ermöglichen kann. Jedoch können bei Einsatz eines Sensormaterials bzw. Halbleiterdetektorelements, dessen Antwortverhalten durch externe Beleuchtung stabilisiert wird, unkontrollierte Änderungen der Beleuchtung, z. B. durch Alterung, Ausfallen, Temperaturfluktuationen, Strahlenschäden und Ähnliches, die Stabilität des Signals negativ beeinflussen. Mit Hilfe der Erfindung kann dies insbesondere verhindert werden.

Weiterhin ist bei zählenden Röntgendetektoren, d.h. bei Detektoren, die eine Zählrate für Röntgenquanten auf Basis einer oder mehrerer Schwellenwerte ermitteln, der eingangs erwähnte Zählratendrift besonders problematisch. Auch diese zeitlich schwer vorhersagbare Änderung der Detektionsgenauigkeit führt zu besonders starken Artefakten in der Bildgebung. Mit Hilfe der Erfindung ist die Möglichkeit geschaffen, um diese unerwünschte Änderung der Stabilisierung bzw. Konditionierung festzustellen und insbesondere zu verhindern.

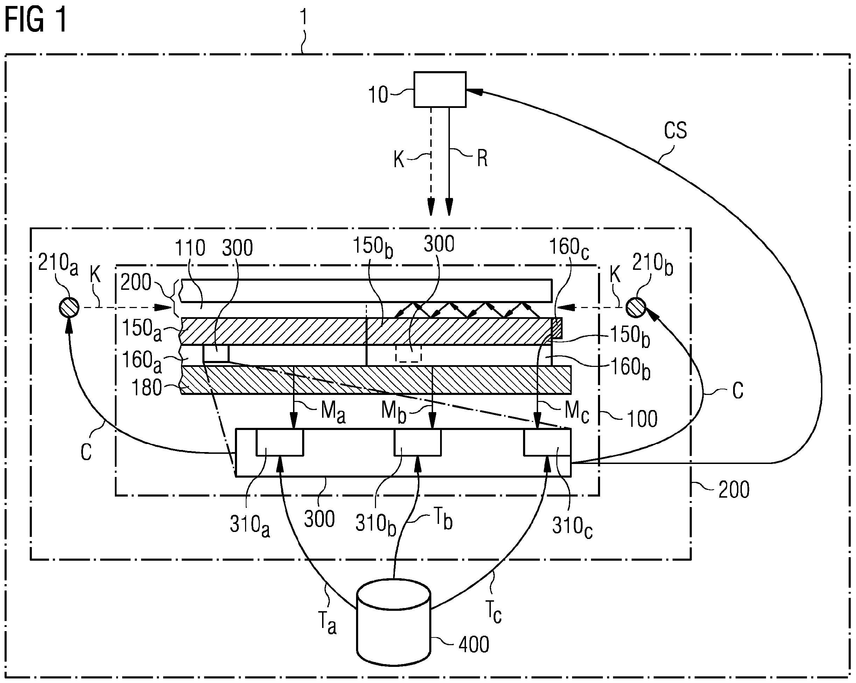

Figur 1 zeigt, schematisch angedeutet, ein Computertomographiesystem 1 mit einer Röntgenstrahlungsquelle 10, die Röntgenstrahlung R in Richtung eines Röntgendetektorsystems 200 abstrahlt.

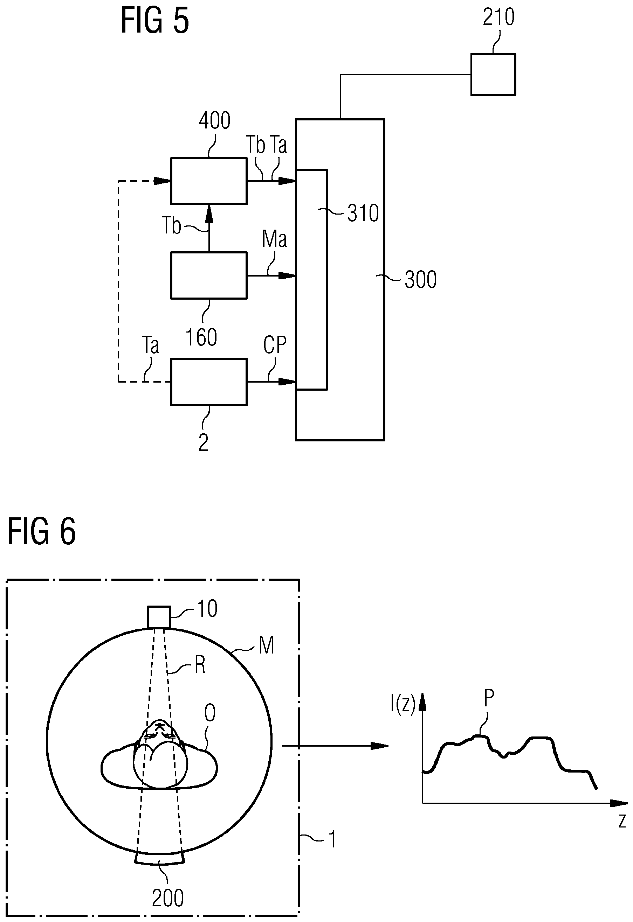

Das CT-System 1 weist dabei einen üblichen Scanner auf, in welchem an einer Gantry das Detektorsystem 200 mit einem Detektor 100 und einer dem Detektor 100 gegenüber liegenden Röntgenquelle 10 um einen Messraum umläuft (wie auch in Figur 6 gezeigt). Vor dem Scanner befindet sich (nicht dargestellt) eine Patientenlagerungseinrichtung bzw. ein Patiententisch, dessen oberer Teil mit einem darauf befindlichen Patienten oder Probanden bzw. Untersuchungsobjekt relativ zum Scanner verschoben werden kann, um das Untersuchungsobjekt relativ zum Detektorsystem 200 durch den Messraum hindurch zu bewegen. Angesteuert werden der Scanner und der Patiententisch durch eine Steuereinrichtung (nicht dargestellt), von der aus über eine übliche Schnittstelle Steuerdaten gesandt werden, um das System gemäß vorgegebener Messprotokolle in der herkömmlichen Weise anzusteuern. Das erfindungsgemäße Verfahren ist grundsätzlich aber auch an anderen CT-Systemen, z. B. mit einem einen vollständigen Ring bildenden Detektor, einsetzbar.

Die vom Detektor 100 akquirierten Rohdaten werden an eine Messdatenschnittstelle der Steuereinrichtung übergeben. Diese Rohdaten werden dann in einer in der Steuereinrichtung meist in Form von Software auf einem Prozessor realisierten Bildrekonstruktionseinrichtung weiterverarbeitet. Diese Bildrekonstruktionseinrichtung weist eine Rohdatenschnittstelle zur Übernahme der Röntgen-CT-Datensätze auf. Für diese Daten wird dann eine Rekonstruktionen durchführt, um Bilddaten zu erzeugen. Die fertigen computertomographischen Bilddaten werden dann an eine Bilddatenschnittstelle übergeben, die die erzeugten Bilddaten dann beispielsweise in einem Speicher der Steuereinrichtung hinterlegt oder in üblicher Weise auf den Bildschirm der Steuereinrichtung ausgibt bzw. über eine (ebenfalls nicht dargestellte) Schnittstelle die Daten in ein an das Computertomographiesystem angeschlossenes Netz, beispielsweise ein radiologisches Informationssystem (RIS) einspeist bzw. in dort vorhandenen Massenspeicher hinterlegt oder auf dort angeschlossenen Druckern entsprechende Bilder ausgibt. Die Daten können auch in beliebiger Weise weiterverarbeitet und dann gespeichert oder ausgegeben werden.

Das Röntgendetektorsystem 200 weist neben dem bereits beschriebenen Röntgendetektor 100 mehrere Strahlungsquellen 210ₐ und 210_{b} zur Konditionierung des Röntgendetektors 100 auf. Der Röntgendetektor 100 ist dabei als sog. Hybriddetektorsystem aufgebaut, d. h. er weist Halbleiterdetektorelemente 150ₐ, 150_{b} auf, die sich in ihrem Ausgangshalbleitermaterial (d.h. z. B. dem Wafermaterial) von dem Ausgangshalbleitermaterial einer Auswerteelektronik, welche zur Bewertung eines Detektionssignals der Halbleiterdetektorelemente 150ₐ, 150_{b} dient, unterscheiden. Somit besteht die Möglichkeit, die Auswerteelektronik und das Halbleiterdetektorelement 150ₐ, 150_{b}, welches Röntgenstrahlung absorbiert, unabhängig voneinander zu positionieren bzw. räumlich zu trennen, sodass u. U. Vorteile in der Langlebigkeit und Wartung der betreffenden Komponenten erzielt werden können. Beispielsweise könnte so eine einfache Nachrüstung des Detektorsystems mit zusätzlichen Komponenten erleichtert werden, sodass auch in Hinblick auf die Integration der nachfolgend beschriebenen Erfindung Vorteile mit dieser Bauweise erzielt werden können.

Im dargestellten Ausführungsbeispiel ist der Röntgendetektor 100 als Stapel von Komponenten aufgebaut. Ausgehend von einem im Wesentlichen flachen gemeinsamen Substrat 180, sind in dem Komponentenstapel nachfolgend (d.h. auf dem Substrat) mehrere Auswerteelektroniken, sog. ASICs (Application-Specific-Integrated-Circuit) 160ₐ, 160_{b} in einer gemeinsamen Ebene des Komponentenstapels angeordnet. Bei dem ASIC handelt es sich um eine integrierte Schaltung, die speziell zur Bewertung eines Detektionssignals eines oder mehrerer der Halbleiterdetektorelement 150ₐ, 150_{b} ausgebildet ist. Im dargestellten Ausführungsbeispiel ist, dem ASIC 160ₐ, 160_{b} in dem Komponentenstapel nachfolgend (in Richtung der Röntgenquelle), jedem ASIC 160ₐ, 160_{b} ein eigenständiges Halbleiterdetektorelement 150ₐ, 150_{b} zugeordnet. Die lediglich schematisehe Darstellung schließt eine räumlich getrennte Bauweise der eigenständigen Halbleiterdetektorelemente 150ₐ, 150_{b} ein.

Über die Detailtreue der schematischen Darstellung hinausgehend sind bevorzugt jedoch mehrere der eigenständigen Halbleiterdetektorelemente 150ₐ, 150_{b} in einem zusammenhängenden Ausgangsmaterial beispielsweise in einer zusammenhängenden Halbleiterschicht, insbesondere in einer matrixartigen Struktur, jeweils aneinander angrenzend, angeordnet.

Die ASICS können dabei vollkommen von dem Halbleiterdetektorelement 150ₐ, 150_{b} überdeckt sein, sodass das jeweils den ASIC 160ₐ, 160_{b} überdeckende Halbleiterdetektorelement 150ₐ, 150_{b} gleichzeitig eine wirkungsvolle Schutzvorrichtung vor einfallender Röntgenstrahlung R für den betreffenden ASIC 160ₐ, 160_{b} bildet.

In synergetischer Art und Weise wird dies dadurch erreicht, dass jedes der Halbleiterdetektorelemente 150ₐ, 150_{b} dazu ausgebildet ist, eintreffende Röntgenstrahlung R ohne vorgehenden photochemischen Umwandlungsprozess zu absorbieren. Es handelt sich um sogenannte direkt konvertierende Halbleiterdetektorelemente 150ₐ, 150_{b}, die in diesem Ausführungsbeispiel aus Cadmium-Zink-Tellurid (CZT) gefertigt sind. Jedes der Halbleiterdetektorelemente 150ₐ, 150_{b} ist mit einer nicht dargestellten Anzahl (vorzugsweise zwei bis vier) von Feldelektroden verbunden, mit deren Hilfe ein elektrisches Feld auf das jeweilige Halbleiterdetektorelement 150ₐ, 150_{b} aufgeprägt werden kann. Zwischen den Feldelektroden befindet sich der Detektionsbereich des Halbleiterdetektorelements 150ₐ, 150_{b}, der im Wesentlichen einen Pixel des Röntgendetektors 100 darstellt. Das im Wesentlichen flache Halbleiterdetektorelement 150ₐ, 150_{b} (d.h. es kann in einen flachen Quader einbeschrieben werden und berührt jede Seite des Quaders), das eine Schmalseite und eine Flachseite aufweist, die der Einfallsrichtung der Röntgenstrahlung R zugewandt ist, wird in dem Ausführungsbeispiel als verarmte Cadmium-Zink-Tellurid-Diode betrieben.

Einfallende Röntgenstrahlung R wird in dem Halbleiterdetektorelement 150ₐ, 150_{b} absorbiert, und erzeugt dort in Abhängigkeit von der jeweiligen Energie des Röntgenstrahlungsquants eine Anzahl von Leitungselektronen und Löchern. Diese driften aufgrund des elektrischen Felds zu den Feldelektroden und rufen dort ein messbares Detektionssignal bzw. einen messbaren Detektionspuls hervor. Der messbare Detektionspuls kann als Strom- oder Spannungssignal mit Hilfe des ASICs 160ₐ, 160_{b} erfasst, ausgewertet und insbesondere digitalisiert werden, sodass dieses Signal der weiteren Verarbeitung, also in dem Ausführungsbeispiel der Rekonstruktion von Bilddaten, zugeführt werden kann. Diese Möglichkeit der Auswertung von Strom- bzw. Spannungssignalen bzw. die Möglichkeit zur Digitalisierung kann vorteilhaft genutzt werden, um beispielsweise nicht nur Signale der Halbleiterdetekorelemente 150ₐ, 150_{b} zu messen oder zu analysieren, sondern auch andere Strom- oder Spannungssignale. Wie nachfolgend erläutert wird, kann es sich beispielsweise auch um die Signale von Lichtsensoren oder anderen Komponenten handeln. Insofern sind die ASICs 160ₐ, 160_{b} hier so aufgebaut, dass sie gleichzeitig auch Überwachungseinheiten 160ₐ, 160_{b} darstellen, mit deren Hilfe ein später noch genauer beschriebener Überwachungsmesswert Mₐ, M_{b} erfasst, gemessen und auch analysiert, insbesondere digitalisiert werden kann.

In dem dargestellten Ausführungsbeispiel ist der ASIC 160ₐ, 160_{b} jeweils dazu ausgebildet, eine Zählrate für Röntgenquanten zu ermitteln. Das heißt, es handelt sich um einen sogenannten "zählenden" bzw. "photonenzählenden" oder "quantenzählenden" Röntgendetektor 100, wobei eine oder mehrere Energieschwellen (d. h. Schwellenwerte für das gemessene Stromoder Spannungssignal) vorgegeben werden. Auf Basis der Energieschwelle kann dann ein Zähler erhöht werden, um so die Zählrate für Röntgenquanten, also die Anzahl der Röntgenquanten pro Zeit bestimmen zu können, welche die vorgegebene Energieschwelle überschreiten.

Das mit Hilfe der Feldelektroden erzeugte elektrische Feld wird jedoch in dem Halbleiterdetektorelement 150ₐ, 150_{b} zeitabhängig modifiziert, sodass grundsätzlich die Gefahr besteht, dass die korrespondierende Zählrate u. U. fehlerhaft ermittelt wird. Wie eingangs erläutert, ist eine Ursache für die zeitabhängige Veränderung des elektrischen Feldes die sogenannte Polarisation, also die zeitlich variable Ausbildung von Raumladungen.

Um diese zeitweise Veränderung des elektrischen Feldes beeinflussen zu können, weist das Röntgendetektorsystem Strahlungsquellen 210ₐ, 210_{b} auf, die in dem Ausführungsbeispiel jeweils durch mehrere Infrarotleuchtdioden gebildet werden. Dadurch, dass mehrere gleichartige Dioden benutzt werden, besteht wie später noch erläutert werden wird, u. A. die Möglichkeit, die Ausfallsicherheit der Strahlungsquellen 210ₐ, 210_{b} zu erhöhen. Die Leuchtdioden führen dem Halbleiterdetektorelement 150ₐ, 150_{b} eine ebenfalls eingangs erläuterte Konditionierungsstrahlung K zu, mit deren Hilfe die zeitabhängige Veränderung des elektrischen Feldes modifiziert werden kann.

Dazu weist der Röntgendetektor 100 eine weitere Schicht auf, die dem Detektorelement 150ₐ, 150_{b} in dem Komponentenstapel nachfolgend (wieder in Richtung zur Röntgenquelle hin) angeordnet ist. Diese Schicht ist als Lichtleiter 120 ausgebildet und weitgehend transparent für einfallende Röntgenstrahlung R. Somit kann der Lichtleiter 120 im Strahlengang der Röntgenstrahlungsquelle 10 zu dem Halbleiterdetektorelement 150ₐ, 150_{b} angeordnet werden, ohne einen wesentlichen Einfluss auf die ermittelte Zählrate auszuüben. Der Lichtleiter 120 umfasst auf der dem Halbleiterdetektorelement 150ₐ, 150_{b} abgewandten, zur ankommenden Röntgenstrahlung R weisenden Seite eine Reflexionsschicht 110, welche die Konditionierungsstrahlung K der Strahlungsquellen 210ₐ, 210_{b} reflektiert und so die Lichtleitung optimiert. Dabei ist hervorzuheben, dass die Reflexionsschicht 110 ebenfalls weitgehend transparent für die Strahlung R der Röntgenstrahlungsquelle 10 ist. Die außerhalb des Strahlengangs der Röntgenstrahlungsquelle 10 angeordneten Strahlungsquellen 210ₐ und 210_{b} koppeln die Konditionierungsstrahlung K, vorzugsweise unter einem geeigneten Winkel, in den Lichtleiter 120 ein. Die in Figur 1 dargestellt Pfeile geben schematisch nur die Hauptabstrahlrichtung der Strahlungsquellen 210ₐ und 210_{b} an, die jedoch eine andere Abstrahlcharakteristik, z.B. kegelförmig aufweisen können.

In dem Ausführungsbeispiel ist diese Einkopplung lediglich schematisch angedeutet; insbesondere kann die Strahlungsquelle 210ₐ, 210_{b} so angeordnet sein, dass die Einkopplung der Konditionierungsstrahlung K in den Lichtleiter 120 vollständig erfolgt.
Die Konditionierungsstrahlung K wird mit Hilfe des Lichtleiters 120 im Wesentlichen gleichmäßig über die Flachseite der Halbleiterdetektorelemente 150ₐ, 150_{b} verteilt, sodass eine Ortsabhängigkeit der Zuführung der Konditionierungsstahlung K für ein oder mehrere der Halbleiterdetektorelemente 150ₐ, 150_{b} bzw. für die Detektionsbereiche vermieden werden kann. Dazu sind in der Reflektorschicht 110 spezielle - nicht dargestellte - Auskoppelungsstrukturen angebracht, die den in Richtung der Oberfläche des Halbleiterdetektorelements 150ₐ, 150_{b} reflektierten Anteil der Konditionierungsstrahlung K mit zunehmender Entfernung von der Strahlungsquelle 210ₐ, 210_{b} erhöht, sodass die Strahlungsdichte bzw. Intensität der auf das Halbleiterdetektorelement 150ₐ, 150_{b} treffenden Konditionierungsstrahlung im Wesentlichen räumlich konstant ist.

Wie gestrichelt angedeutet ist, kann in dem Ausführungsbeispiel auch die Röntgenstrahlungsquelle 10 dazu verwendet werden, Konditionierungsstrahlung K dem Halbleiterdetektorelement 150ₐ, 150_{b} zuzuführen. Dabei unterscheidet sich die Konditionierungsstrahlung K der Röntgenstrahlungsquelle 10 von der Konditionierungsstrahlung K der Strahlungsquellen 210ₐ und 210_{b} nicht nur durch die Art der Strahlung sondern insbesondere auch in ihrer Energie und ihrer Intensität. Somit können unterschiedliche Konditionierungen der Halbleiterdetektorelemente 150ₐ, 150_{b} mit Hilfe der unterschiedlichen Konditionierungsstrahlung K und der unterschiedlichen Konditionierungsstrahlungsquellen, in dem Beispiel Röntgenstrahlungsquelle 10 und Leuchtdioden, erreicht werden.

Dies kann beispielsweise mit einer Steuerungseinheit 300 erfolgen. Der Röntgendetektor 100 weist hier eine Steuerungseinheit 300 auf, die mit Hilfe von Steuersignalen CS die Zuführung der Konditionierungsstrahlung K an die Halbleiterdetektorelemente 150ₐ, 150_{b} steuert und auch regelt. Die Steuersignale CS werden dabei an die Strahlungsquellen 210ₐ, 210_{b} (bzw. optional an die Röntgenstrahlungsquelle 10) übermittelt, und können direkt bereits erwähnten Steuerungs- oder Regelgrößen entsprechen, bzw. diese mittelbar wiedergeben. Wie in Figur 1 dargestellt, ist die Steuerungseinheit 300 auch in einem der ASICs 160ₐ bzw. eine der Überwachungseinheiten 160ₐ, 160_{b} integriert angeordnet und kann somit vorteilhafterweise Schaltkreise und Funktionen des ASICs oder auch innerhalb des ASICs vorhandene Daten nutzen. Dabei kann, wie durch den gestrichelten Block im ASIC 160_{b} angedeutet, die Steuerungseinheit 300 in jedem der ASICs realisiert sein oder auch auf mehrere ASICs verteilt sein.

Die Steuerung bzw. Regelung der Zuführung der Konditionierungsstrahlung K kann bei mehreren Halbleiterdetektorelementen 150ₐ, 150_{b} auch für jedes der Halbleiterdetektorelemente 150ₐ, 150_{b} individuell erfolgen. Dies bietet insbesondere den Vorteil, dass die Konditionierung großflächiger Detektorsysteme 200 optimiert werden kann. Hierzu kann jedem ASIC auch jeweils eine eigene Steuerungseinheit 300 zugeordnet sein.

Alternativ oder zusätzlich kann die Steuerung bzw. Regelung der Zuführung der Konditionierungsstrahlung K auch mittels einer zusätzlichen Elektronikschaltung erfolgen, die als sog. "Modul-Back-Plane" für das Detektorsystem 200 unabhängig vorhanden ist. Die Modul-Back-Plane umfasst typischerweise programmierbare Logikeinheiten wie FPGAs und/oder Speicherelemente, welche bereits Steuerungsaufgaben bzg. des Röntgendetektors übernehmen können. Die Steuerungseinheit 300 kann dann in die "Modul-Back-Plane integriert angeordnet sein, und ebenfalls bereits vorhandene Schaltkreise oder Funktionen der "Modul-Back-Plane" wie z.B. FPGAs und/oder Speicherelemente nutzen. Diese Schaltkreise und Funktionen weisen dann eine Mehrfachverwendung auf. Dies ist eine besonders vorteilhafte Anordnung, wenn eine zentrale Steuerungseinheit 300 für mehrere Halbleiterdetektorelemente 150ₐ, 150_{b} verwendet werden soll und weiterhin kann so auch eine Nachrüstung der Erfindung in bereits vorhandene Detektorsysteme erleichtert werden.

Die Steuerungseinheit 300 verfügt über Eingangsschnittstellen 310ₐ, 310_{b}, 310_{c}, die einen Sollwert Tₐ, T_{b}, T_{c} von einer Sollwertspeichereinheit 400 oder auch einer Überwachungseinheit 160ₐ, 160_{b} erhalten und der Steuerungseinheit 300 zur Verfügung stellen. Die Steuerung bzw. Regelung der Zuführung der Konditionierungsstrahlung K an die Halbleiterdetektorelemente 150ₐ, 150_{b} erfolgt auf Basis der Sollwerte Tₐ, T_{b}, T_{c}.

Bevorzugt wird der Sollwert Tₐ, T_{b}, T_{c} dabei durch Messung bestimmt, insbesondere bevor mit Hilfe des Detektors 100 eine Röntgendetektionsmessung durchgeführt wird, deren Ergebnis einer weitergehenden Verwendung zugeführt werden soll. Ein entsprechend bestimmter Sollwert Tₐ, T_{b}, T_{c} kann beispielsweise in der Sollwertspeichereinheit 400 hinterlegt sein. Bei der Sollwertspeichereinheit 400 kann es sich beispielsweise um eine Messprotokollspeichereinheit des Computertomographiesystems handeln, in dem eines oder mehrere Messprotokolle zur Durchführung einer Computertomographiemessung hinterlegt sind. Bei dem Sollwert Tₐ, T_{b}, T_{c} kann es sich auch um einen Messwert handeln, der im Laufe der Detektion der Röntgenstrahlung R bzw. der Zuführung der Konditionierungsstrahlung K ermittelt wird, insbesondere mit Hilfe einer oder mehrerer der Überwachungseinheiten 160ₐ, 160_{b}, 160_{c}.

In dem Ausführungsbeispiel wird beispielsweise die Intensität der Konditionierungsstrahlung K mit Hilfe eines Lichtsensors 160_{c} gemessen, der wiederum eine Überwachungseinheit 160_{c} repräsentiert. Der Lichtsensor 160_{c} ist so angebracht, dass er möglichst gut die auf das Halbleiterdetektorelement 150ₐ, 150_{b} auftreffende effektive Bestrahlungsintensität misst. Wie Figur 1 zeigt, ist der Lichtsensor 160_{c} seitlich vom Halbleiterdetektorelement 150ₐ, 150_{b} angebracht, d. h. insbesondere auf oder an dessen Schmalseite, so dass er keinen Schatten auf das Halbleiterdetektorelement 150ₐ, 150_{b} wirft.

Der Lichtsensor 160_{c} ist somit außerhalb des Primärstrahlengangs der Röntgenstrahlenquelle 10 zur dem Halbleiterdetektorelement 150ₐ, 150_{b} angeordnet. Weiterhin ist er zusätzlich gegenüber gestreuter Röntgenstrahlung R mechanisch geschützt. Dieser mechanische Schutz gewährleistet trotzdem eine wirkungsvolle Messbarkeit der Beleuchtungsintensität. Beispielsweise kann eine entsprechende Schutzvorrichtung bzw. Abschirmungsmittel des Lichtsensors darin bestehen, dass Molybdän, Wolfram, Blei, Wismut und Platin verwendet wird. Eine entsprechende Schutzschicht könnte einem oder mehreren der Lichtsensoren 160_{c} zugeordnet sein.

Weiterhin ist der Lichtsensor trotz seines Schutzes vor gestreuter Röntgenstrahlung R aus einem Material aufgebaut, das möglichst unempfindlich gegenüber der Röntgenstrahlung R ist. Beispielsweise kann ein Material verwendet werden, das weitgehend transparent für Röntgenstrahlung ist.

Über die Darstellung der Figur 1 hinausgehend, könnte der Lichtsensor in dem bereits erwähnten ASIC integriert sein. Somit kann eine Erfassung der Beleuchtungsintensität direkt im ASIC erfolgen. Das heißt, die Beleuchtungsintensität wird insbesondere direkt mit Hilfe des zusätzlich eingebauten Lichtsensors gemessen. Direkt gemessen bedeutet in diesem Fall, dass es sich bei dem gemessenen Wert um dem Messwert eines dedizierten Lichtsensors handelt, der keine weitere Aufgabe hat, als beispielsweise die Intensität der Konditionierungsstrahlung zu messen. Es könnten mehrere unabhängig dedizierte Sensoren vorhanden sein, um beispielsweise die Zeit bzw. Dauer der Zuführung von Strahlung, insbesondere der Konditionierungsstrahlung oder die Wellenlänge bzw. das Spektrum von Strahlung (d.h. insbesondere der Konditionierungsstrahlung) direkt zu messen.

Darüber hinaus kann auch das Halbleiterdetektorelement 150a, 150b in Verbindung mit der zugehörigen Auswerteelektronik (d.h. dem ASIC) einen Sensor für die Zuführung der Konditionierungsstrahlung, und insbesondere einen Lichtsensor, repräsentieren.

Beispielsweise kann bei erwähnter Beschaltung des Halbleiterdetektorelements 150a, 150b mit Feldelektroden, aus dem elektrischen Strom, der durch das Halbleiterdetektorelement 150a, 150b fließt, die Bestrahlungsintensität ermittelt werden. Der elektrische Strom kann hierzu über die Feldelektroden bzw. die Spannungsversorgung des Halbleiterdetektorelements 150a, 150b gemessen und digitalisiert werden. Dies repräsentiert eine indirekte Messung der Beleuchtungsintensität im Sinne der Erfindung, da die Bestrahlungsintensität mit Hilfe eines "Lichtsensors" ermittelt wird, welcher kein dedizierter Lichtsensor ist, also noch andere Aufgaben während der Detektion von Röntgenstrahlung erfüllt.

Es besteht auch die Möglichkeit, den Strom mittels des ASICs 160ₐ, 160_{b} zu messen, der direkt an das Halbleiterdetektorelement 150a, 150b angekoppelt ist. Dies ist besonders vorteilhaft, da der ASIC 160ₐ, 160_{b} bereits Schaltkreise zur Messung und Digitalisierung analoger Signale enthält und ferner, wie bereits erwähnt, die Möglichkeit einer direkten Integration der Steuerungseinheit 300, also von Schaltungen zur dynamischen Regelung und Steuerung der Beleuchtungsintensität, bietet.

Erfindungsgemäß erfolgt die Steuerung bzw. Regelung der Zuführung der Konditionierungsstrahlung dann mit Hilfe der Stromaufnahme einer Gruppe von Halbleiterdetektorelementen 150a, 150b. Die Stromaufnahme könnte dann bei Zuführung der Konditionierungsstrahlung direkt über die Spannungsversorgung der Feldelektroden gemessen werden und repräsentiert einen Sollwert, der ein Grundniveau der Stromaufnahme vorgibt. Die Steuerung der Strahlungsintensität erfolgt in dem Ausführungsbeispiel so, dass das Grundniveau im Wesentlichen konstant ist. D.h. dass unabhängig von einer durchgeführten Röntgenmessung dieses Grundniveau der Stromaufnahme erreicht wird. Es kann somit angenommen werden, dass das Halbleiterdetektorelement nahezu gleich bleibend konditioniert ist.

Bei Verwendung des beschriebenen "quantenzählenden" Detektors, kann dann die Steuerung der Konditionierungsstrahlung so erfolgen, dass das Grundniveau der Stromaufnahme unterhalb von Schwellenwerten zur Bestimmung einer Zählrate liegt. Somit kann eine spezielle und möglicherweise rechenintensive Berücksichtigung des Verlaufs der Steuerung der Konditionierung in der Auswertung der Detektionssignale vermieden werden.

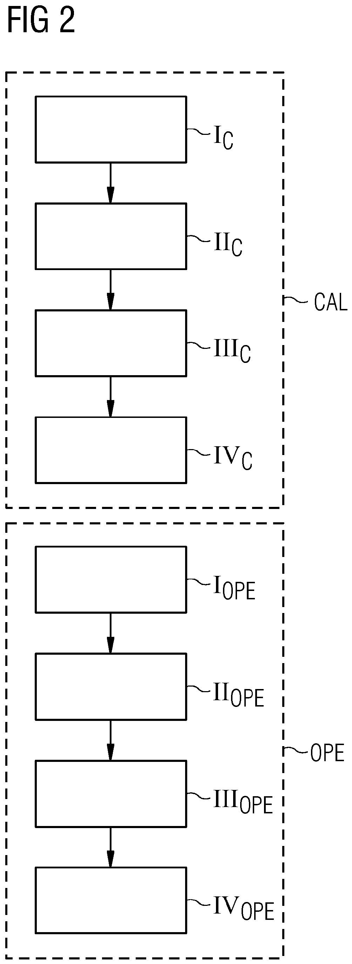

Figur 2 zeigt nachfolgend ein weiteres Verfahren zur Detektion von Röntgenstrahlung, welches mit Hilfe des in Figur 1 dargestellten Detektorsystems 200 durchgeführt werden kann. Insbesondere wird die Bedeutung des Sollwerts für die Steuerung und Regelung der Zuführung der Konditionierungsstrahlung anhand eines Ausführungsbeispiels dargelegt und insbesondere die Variation des Sollwerts zu mehreren unterschiedlichen Zielwerten.

Mit Hilfe der Steuerung und/oder Regelung kann die Gewährleistung einer zeitlich möglichst konstanten Beleuchtungsintensität angestrebt werden, sodass beispielsweise langfristig auftretende Probleme wie Degeneration oder Ausfall der Strahlungsquellen erkannt und auch kompensiert werden können.

Das mit Hilfe der Figur 2 erläuterte Verfahren zur Detektion von Röntgenstrahlung unterteilt dabei die Verfahrensschritte in zwei Gruppen. Eine erste Gruppe umfasst Kalibrierungsschritte CAL zur Vorgabe eines Sollwerts, und eine zweite Gruppe weist Schritte auf, welche die Steuerung bzw. Regelung der Konditionierungsstrahlung auf Basis des Sollwerts zeigen, und beschreibt dementsprechend Betriebsschritte OPE des Detektorsystems. Während des Betriebs mit den Betriebsschritten OPE kann der Sollwert insbesondere zur Erreichung mehrerer unterschiedlicher Zielwerte verändert werden.

Die Kalibrierungsschritte CAL der ersten Gruppe ermöglichen also dann nachfolgend den Betrieb und insbesondere die Steuerung und Regelung der Zuführung der Konditionierungsstrahlung in mehreren Betriebsschritten OPE gemäß der zweiten Gruppe.

In einem ersten Schritt I_{c} wird zunächst die Strahlungsquelle eingeschaltet, um dem Halbleiterdetektorelement eine bestimmte Konditionierungsstrahlung zuzuführen. Der Schritt I_{C} beschreibt also die Variation eines Steuerungswerts, welcher die Zuführung der Konditionierungsstrahlung zur dem Halbleiterdetektorelement steuert, von 0 auf einen vorgegeben Wert. Die in Figur 1 beschriebene IR-LED-Lichtquelle kann z.B. anfänglich mit einer bestimmten Stromstärke (die einem mA-Wert entspricht) betrieben werden.

In einem Schritt II_{C} kann (z.B. wie bezüglich Figur 1 beschrieben mit Hilfe des ASICs) die Intensität der dem Halbleiterdetektorelement zugeführten Konditionierungsstrahlung gemessen werden, insbesondere auch über (indirekte) korrespondierende Größen wie beispielsweise die Stromaufnahme des Halbleiterdetektorelements.

Sofern es darum geht, die Konditionierungsstrahlung zeitlich konstant zu halten, kann der im Schritt II_{C} gemessenen Intensitätswert in dem weiteren Verfahren einen Sollwert bzw. Sollmesswert bilden. Der Schritt II_{C} dient also dann zur Ermittlung eines Sollwertes, auf dessen Basis die Steuerung der Zuführung der Konditionierungsstrahlung erfolgt.

In einem weiteren Kalibrierungsschritt III_{C} wird dann eine Korrelation bzw. Korrelationsfunktion zwischen der Stromstärke (d.h. dem mA-Wert, also dem Steuerungswert einer Steuerungsgröße, welche die Zuführung der Konditionierungsstrahlung steuert), mit der die Strahlungsquelle betrieben wird, und dem durch den ASIC gemessenen Intensitätswert ermittelt, also einer Art IST-Wert, welcher aussagt, wie viel Konditionierungsstrahlung tatsächlich dem Halbleiterdetektorelement zugeführt wird.

Bei einer einfachen Korrelation kann es, wie beschrieben, ausreichen, einen einzelnen Messwert bzw. IST-Wert heranzuziehen, um die Korrelation zu ermitteln. Für kompliziertere Korrelationen können ggf. die Schritte I_{C} und/oder II_{C} für andere Steuerungswerte und Messwerte wiederholt werden, also der Steuerungswert variiert werden.

In einem, wie gestrichelt angedeutet ist, vierten optionalen Kalibrationsschritt IV_{C} kann eine sog. Look-up-Tabelle (auch als Korrelationstabelle bzw. Look-Up-Table bezeichnet) erstellt werden, die basierend auf der ermittelten Korrelation, einem Messwert (hier die gemessene Intensität) der Konditionierungsstrahlung einen bestimmten Steuerungswert (hier dem Stromwert zur Ansteuerung der LED-Lichtquellen) zuordnet. Diese Zuordnung erfolgt in der Look-Up-Tabelle für mehrere Steuerungswerte.

Die in der Look-Up-Tabelle hinterlegten IST-Werte (bei denen es sich um die unmittelbar bei der Kalibration ermittelten Messwerte und/oder auch dazwischen interpolierte werte handeln kann), können somit im späteren Betrieb auch als potentielle Sollwerte bzw. Zielwerte (also variierte bzw. veränderte Sollwerte) genutzt werden, um die zugehörigen (Soll-) Steuerungswerte zu ermitteln. Somit enthält die Look-Up-Tabelle also auch mehrere Zuordnungen von Sollwerten bzw. Zielwerten (also veränderten Sollwerten) zu Steuerungswerten, die auf Basis der Korrelation ermittelt wurden.

Die Schritte I_{C} bis IV_{C}, also die Kalibrierungsschritte CAL, können dabei von der bzgl. Figur 1 erwähnten Steuerungseinheit veranlasst werden, bzw. mit Hilfe der Steuerungseinheit ausgeführt werden. Insbesondere können die besagten Berechnungen oder auch Messungen mit Hilfe der Steuerungseinheit veranlasst oder ggf. durchgeführt werden. Jedoch ist auch denkbar, dass die Kalibrierungsschritte CAL unabhängig von der Steuerungseinheit ausgeführt werden.

Wird wiederholt eine solche Kalibration durchgeführt, kann vorzugsweise auch eine Alterung der Strahlungsquellen frühzeitig aufgrund von Änderungen der IST-Werte (bzw. potentiellen Sollwerte) gegenüber vorhergehenden Messungen festgestellt werden. Eine unkontrollierte Änderung der Zuführung der Konditionierungsstrahlung wird somit verhindert. Diesbezüglich kann dann eine Warnung ausgegeben werden, so dass beispielsweise ein Austausch der Strahlungsquellen eingeleitet wird, bevor der Ausfall der Strahlungsquellen eine Verschlechterung der Bildqualität oder gar einen Ausfall des Tomographiesystems bzw. des verwendeten Geräts bewirkt.

Die Look-Up-Tabelle kann dann beispielsweise an die Steuerungseinheit bevorzugt über eine der bzgl. Figur 1 erwähnten Eingangsschnittstellen übermittelt werden, sodass ein Steuerungsalgorithmus der Steuerungseinheit zur Steuerung der Zuführung der Konditionierungsstrahlung auf Basis der Look-Up-Tabelle arbeitet. Insbesondere ist hervorzuheben, dass mit Hilfe der Look-Up-Tabelle vermieden werden kann, die Korrelationsfunktion für identische Punkte der Korrelation mehrmals zu berechnen.

Wie bereits angedeutet, kann der Schritt IV_{C} aber auch lediglich optional durchgeführt werden. In diesem Fall kann die Korrelation bzw. Korrelationsfunktion, anhand derer für jeden Sollwert oder Zielwert (d.h. gewünschten IST-Wert) der zugehörige Steuerungswert später ermittelt werden kann, an die Steuerungseinheit übermittelt werden, sodass die Steuerungseinheit auf Basis der ermittelten Korrelationsfunktion die Zuführung der Konditionierungsstrahlung steuert.

Die Steuerung der Zuführung der Konditionierungsstrahlung erfolgt in dem Ausführungsbeispiel mit Hilfe der Betriebsschritte OPE.

Nach der Bestimmung der Look-Up-Tabelle bzw. der Korrelationsfunktion kann der Betrieb des Detektorsystems dann so erfolgen, dass ein Zielwert bzw. Sollwert für eine effektive Strahlungsintensität vorgegeben wird, der eine bestimmte Konditionierung des Halbleiterdetektorelements sicherstellt. Dies erfolgt in einem ersten Schritt I_{OPE}.

Auf Basis der Look-up-Tabelle bzw. Korrelationsfunktion (Im Folgenden wird dabei von einer Look-Up-Tabelle ausgegangen, mit einer Korrelationsfunktion läuft das Verfahren entsprechend ab) kann in einem weiteren Schritt II_{OPE} die Zuführung der Konditionierungsstrahlung so gesteuert werden, dass eine bestimmte effektive Intensität der Konditionierungsstrahlung erreicht wird, die dem Zielwert entspricht.

Dazu wird ein der vorgegebenen Strahlungsintensität entsprechender mA-Wert der Look-up-Tabelle entnommen und die Strahlungsquelle in einem dritten Schritt III_{OPE} mit diesem mA-Wert angesteuert, sodass eine effektive Bestrahlungsintensität, die dem Zielwert entspricht erreicht wird.

Der Zielwert, d.h. hier die Intensität der Konditionierungsstrahlung, kann während des Betriebs des Detektorsystems wie erwähnt konstant sein.

Durch die zeitlich gleichmäßige, konstante und damit bessere Beleuchtung kann insbesondere die Qualität der Röntgenbildgebung verbessert werden. Dies beruht beispielsweise darauf, dass die Konditionierung des Halbleiterdetektorelements weitgehend zeitlich invariant und damit bekannt ist. Eine Degeneration der Strahlungsquellen kann somit kompensiert werden, da die Steuerung auf Basis eines gemessenen Werts erfolgt.

Damit ist es beispielsweise möglich relativ kostengünstige Standardstrahlungsquellen zu verwenden, die keine extrem hohe Qualität aufweisen müssen, da entsprechende Abweichungen mit Hilfe der Steuerung und auch Regelung der Konditionierungsstrahlung ausgeglichen werden können.

Der Vorteil einer bekannten Konditionierung kann auch bei einer dynamisch veränderten Konditionierung also einer dynamisch veränderten Zuführung der Konditionierungsstrahlung erhalten werden. Bei bekannter Intensität der Konditionierungsstrahlung ist auch die Konditionierung des Halbleiterdetektorelements bekannt bzw. diese kann ermittelt werden, sodass der Zielwert, also die jeweils angestrebte Intensität der Konditionierungsstrahlung dynamisch verändert werden kann, ohne an Information über die Konditionierung des Halbleiterdetektorelements einzubüßen.

Somit kann einer der Vorteile der Erfindung ebenfalls die Anpassung an unterschiedliche Anforderungen des Betriebs des Detektorsystems sein, ohne die Qualität der Röntgenbildgebung und insbesondere der Computertomographiemessung negativ beeinflusst wird.

Deshalb kann gemäß einem weiteren Betriebsschritt IV_{OPE} in dem Verfahren eine Wiederholung der Schritte I_{OPE} bis III_{OPE} mit jeder Veränderung des Sollwerts erfolgen. Sobald im Schritt I_{OPE} eine neue gewünschte Intensität der Konditionierungsstrahlung, d.h. ein neuer Zielwert vorgegeben wird, wird auf Basis der Look-Up-Table ein korrespondierender mA-Wert ermittelt, und die LED-Lichtquelle mit einem Betriebsstrom des ermittelten mA-Werts betrieben (II_{OPE}, III_{OPE}) .

Ferner kann das Verfahren auch dahingehend erweitert werden, dass nicht nur eine Steuerung der Zuführung der Konditionierungsstrahlung erfolgt, sondern auch eine Regelung.

Wie in dem Ausführungsbeispiel bereits beschrieben, wird die effektive Intensität der Konditionierungsstrahlung im Schritt II_{C} vorzugsweise mit Hilfe des ASICs bestimmt. In Bestrahlungspausen, d.h. immer dann wenn keine Röntgenstrahlung mit Hilfe des ASICs ausgewertet wird, kann dann überprüft werden, ob die Zuführung der Bestrahlung auch dem vorgegebenen Sollwert entspricht. Dazu kann beispielsweise mit Hilfe des ASICs wie bzgl. Figur 1 beschrieben, die Intensität der Konditionierungsstrahlung als Überwachungsmesswert (bzw. aktueller IST-Wert) gemessen werden und mit dem Sollwert verglichen werden. Bei Abweichung kann eine Korrektur des mA-Werts so geregelt werden, bis der Sollwert erreicht wird. Mit Hilfe eines zu dem Sollwert korrespondierenden Überwachungswerts, kann so eine Regelung der Zuführung der Konditionierungsstrahlung realisiert werden. Auch auf Basis des Überwachungsmesswerts kann dann beispielsweise eine Alterung der Lichtquellen festgestellt werden, so dass wie beschrieben eine Warnung abgegeben wird.

Ferner kann mit Hilfe eines Überwachungsmesswerts oder der beschriebenen Kalibrierung eine Temperaturabhängigkeit der Beleuchtungsstärke der Strahlungsquellen erkannt und korrigiert werden oder ein Ausfall einer Strahlungsquelle erkannt werden und durch entsprechend höhere Intensität von möglicherweise verfügbaren weiteren Strahlungsquellen ausgeglichen werden.

Figur 1 gibt dabei weitere Hinweise, auf welche Art und Weise die beschriebenen Verfahren zur Steuerung und Regelung der Konditionierungsstrahlung weitergebildet sein können.

In dem Ausführungsbeispiel des Detektorsystems 200 gemäß Figur 1 sind wie erwähnt mehrere Überwachungseinheiten 160ₐ, 160_{b}, 160_{c} dargestellt, welche einen Überwachungsmesswert Mₐ, M_{b}, M_{c} (insbesondere die Intensität der Konditionierungsstrahlung K) ermitteln können. Diese Überwachungsmesswerte Mₐ, M_{b}, M_{c} können dann jeweils wiederum an die Eingangsschnittstelle 310ₐ, 310_{b}, 310_{c} übermittelt werden, sodass beispielsweise die Steuerung auf Basis der Abweichung des Überwachungsmesswerts Mₐ, M_{b}, M_{c} zu dem Sollwert Tₐ, T_{b}, T_{c} erfolgen kann. Werden dabei externe Überwachungseinheiten 160_{c}, wie beispielsweise der Lichtsensor verwendet, kann eine Steuerung bzw. Regelung auch während einer Röntgendetektionsmessung erfolgen. Beispielsweise kann an Stelle des ASICs in dem bzgl. der Figur 2 beschriebenen Verfahrens der Lichtsensor als Überwachungseinheit 160_{c} verwendet werden

Neben der Berücksichtigung der Abweichung des Überwachungsmesswerts kommen noch andere Regelungs- bzw. Steuerungsalgorithmen in Frage, die insbesondere auf einem komplexen Steuerungs- und Regelungsmodell mit mehreren Eingangsparametern beruhen können.
Der Lichtsensor oder auch die Halbleiterdetektorelemente (z. B. für Röntgenstrahlung als Konditionierungsstrahlung) können in dem Ausführungsbeispiel neben der Intensität der Konditionierungsstrahlung, auch deren spektrale Verteilung erfassen bzw. die Energie (Wellenlänge) der Konditionierungsstrahlung bestimmen bzw. messen. Auch diese Messwerte können als Überwachungsmesswerte Mₐ, M_{b}, M_{c} an die Steuerungseinheit 300 übermittelt werden, oder auch als Sollwert Tₐ, T_{b}, T_{c} dienen. Darüber hinaus kann die Steuerung bzw. Regelung der Zuführung der Konditionierungsstrahlung auch eine Anpassung der Überwachungseinheiten 160ₐ, 160_{b}, 160 und insbesondere des Lichtsensors an das Spektrum der Strahlungsquelle umfassen. Z. B. könnte dies die Auswahl eines Lichtsensors umfassen, d.h. ein Lichtsensor, der im Wesentlichen rotes Licht erfassen kann, kann so angeordnet sein, dass er die Strahlung einer roten Strahlungsquelle erfasst. Und darüber hinaus kann die Anpassung auch in einer Auswahl bestehen, die beispielsweise zwischen dem ASIC und anderen Lichtsensoren, insbesondere in Abhängigkeit von der vorhandenen oder genutzten Strahlungsquelle erfolgt.

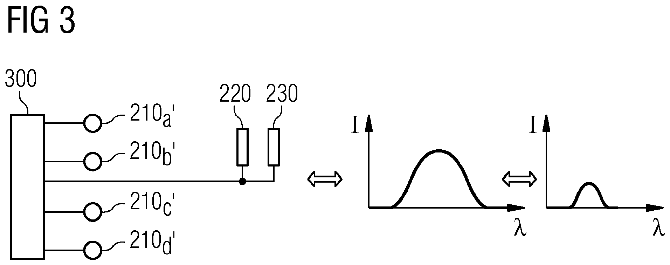

Figur 3 zeigt genauer, wie die Steuerung oder auch Regelung der Strahlungsquellen erfolgen kann. In dem dargestellten Ausführungsbeispiel sind verschiedene Lichtquellen 210ₐ', 210_{b}', 210_{c}', 210_{d}', die als Strahlungsquellen für die Konditionierungsstrahlung dienen, mit der Steuerungseinheit 300 verbunden. Eine Lichtquelle 210ₐ' wird durch ein LED-Cluster gebildet, welches sowohl LEDs umfasst, die Licht im sichtbaren Bereich abstrahlen, als auch LEDs, die Licht im UV, bzw. IR-Bereich abstrahlen. Die Verwendung von LEDs ist deshalb besonders sinnvoll, da LEDs konstruktionsbedingt besonders ausfallsicher sind und aufgrund ihrer Abmessungen beispielsweise in das Detektorsystem integriert werden können. Darüber hinaus bieten insbesondere LEDs die Möglichkeit, als redundante Strahlungsquellen zur Zuführung der Konditionierungsstrahlung zu dienen, welche bei Bedarf zugeschaltet werden können. Insbesondere deshalb umfasst die Steuerung und auch Regelung bei mehreren Lichtquellen auch die Auswahl einer Anzahl von Lichtquellen die zur Zuführung der Konditionierungsstrahlung verwendet werden.

Darüber hinaus ist eine weitere Lichtquelle 210_{b} mit der Steuerungseinheit 300 verbunden, die in diesem Fall durch eine Halogenlampe gebildet wird. Dieser Halogenlampe ist eine spektrale Filtereinheit 220 im optischen Weg der Konditionierungsstrahlung zu dem Halbleiterdetektorelement nachgeschaltet, dessen spektrale Bandbreite steuerbar ist.

Darüber hinaus ist im optischen Weg der Konditionierungsstrahlung zu dem Halbleiterdetektorelement ebenfalls eine Attenuatoreinrichtung 230 der Filtereinrichtung 220 und somit auch der Lichtquelle 210_{b}' nachgeordnet. Mit Hilfe der steuerbaren Attenuatoreinrichtung 230 kann das Licht der Strahlungsquelle 210_{b}' hinsichtlich der Intensität der dem Halbleiterdetektorelement zugeführten zusätzlichen Strahlung gesteuert oder auch geregelt werden. Somit kann die Strahlungsquelle, die durch die Kombination aus Filtereinheit 220, Attenuatoreinheit 230 und Lichtquelle 210_{b}' gebildet wird, hinsichtlich der spektralen Verteilung der Konditionierungsstrahlung und der Intensität der Konditionierungsstrahlung gesteuert bzw. geregelt werden, wie dies ebenfalls in Figur 3 angedeutet ist. In den rechts dargestellten beiden Diagrammen, welche die spektrale Verteilung (d.h. über die Wellenlänge λ) von Intensitätswerten I der Konditionierungsstrahlung beschreiben, ist erkennbar, wie sich beispielsweise der Wellenlängenbereich in dem die Konditionierungsstrahlung abgegeben wird, und die Intensität der abgegebenen Konditionierungsstrahlung ändern kann.

Eine weitere Lichtquelle 210_{c}' wird durch eine Leuchtstofflampe gebildet, die ebenfalls mit der Steuerungseinheit 300 verbunden ist. Die Leuchtstofflampe strahlt sowohl Konditionierungsstrahlung im sichtbaren Wellenlängenbereich als auch Konditionierungsstrahlung im UV-Wellenlängenbereich aus. Somit bildet eine Leuchtstofflampe eine einfache Möglichkeit einer Strahlungsquelle mit besonders breitem Strahlungsspektrum zur Konditionierung. Somit kann beispielsweise in Kombination mit den bereits angesprochenen Filtereinheiten (oder auch Attenuatoreinheiten) eine Strahlungsquelle aufgebaut werden, die in einem besonders breiten Spektralbereich steuerbar ist.

Ferner ist mit der Steuerungseinheit 300 eine Lichtquelle 210_{d}' verbunden, die durch einen Laser gebildet wird. Der Laser strahlt eine im Wesentlichen monochromatische Konditionierungsstrahlung ab, sodass eine besondere Konditionierung zuverlässig mit Hilfe des Lasers eingestellt werden kann.

Dabei ist nicht ausgeschlossen, dass mehrere Laser als Strahlungsquellen verwendet werden und insbesondere auch nicht, dass die erwähnten Lichtquellen 210ₐ', 210_{b}', 210_{c}', 210_{d}' mehrfach zur Zuführung der Konditionierungsstrahlung vorhanden sind.

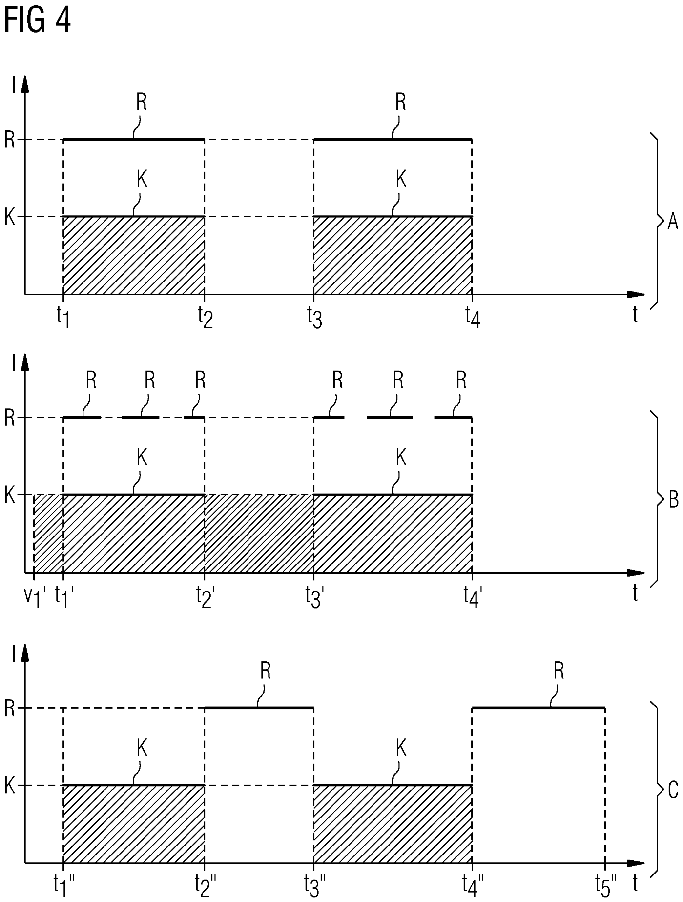

In Figur 4 ist ferner angedeutet, wie die Steuerung und oder Regelung der Zuführung der Konditionierungsstrahlung in zeitlicher Hinsicht erfolgen kann. Dargestellt ist hier jeweils die Intensität I der Konditionierungsstrahlung K und der zur Bildgebung genutzten Röntgenstrahlung R über der Zeit t.

Wie bereits erwähnt, kann mit Hilfe der Erfindung u.a. erreicht werden, das Röntgendetektorsystem an unterschiedliche Anforderungen insbesondere der Röntgenbildgebung angepasst wird.

In Abhängigkeit von den Bestrahlungsanforderungen, die nachfolgend noch genauer beschrieben werden, kann zur zeitlichen Steuerung bzw. Regelung der Zuführung der Konditionierungsstrahlung zwischen mehreren Varianten der zeitlichen Steuerung oder Regelung umgeschaltet oder gewählt werden. Weiterhin kann auch eine beliebige Kombination der in Figur 4 dargestellten Varianten der zeitlichen Steuerung oder auch Regelung verwendet werden.

Beispielsweise gibt die Röntgenquelle in einer Variante A der zeitlichen Steuerung oder auch Regelung, in einem ersten Zeitraum, der vom Zeitpunkt t₁ bis zum Zeitpunkt t₂ dauert, Röntgenstrahlung R ab. Während dieses Zeitraums wird ebenfalls Konditionierungsstrahlung K dem Halbleiterdetektorelement zugeführt. Dies ist ebenso in dem Zeitraum der Fall, der zwischen den Zeitpunkten t₃ und t₄ liegt. Im Zeitraum zwischen den Zeitpunkten t₂ und t₃ gibt die Röntgenquelle jedoch keine Röntgenstrahlung ab. Somit wird der Detektor lediglich dann konditioniert, wenn die Röntgenstrahlung auch auf den Detektor trifft, sodass eine bekannte Konditionierung des Halbleiterdetektorelements während der Röntgenmessung gegeben ist. Dies kann insbesondere durch die zeitliche Steuerung der Strahlungsquellen erreicht werden, die keine Röntgenstrahlung aussenden.

Alternativ kann beispielsweise wie in Variante B eine Dauerbestrahlung über mehrere Messsequenzen mit Konditionierungsstrahlung durchgeführt werden. Im Unterschied zur Variante A, bei der wie erwähnt bei Abschalten der Röntgenstrahlung die Zufuhr der Konditionierungsstrahlung gestoppt wird, kann in Variante B die Zuführung der Konditionierungsstrahlung zeitlich so gesteuert bzw. geregelt werden, dass während mehrerer durchzuführenden Röntgenmessungen bzw. Messsequenzen, die auch Pausen umfassen können, ununterbrochene Konditionierungsstrahlung zugeführt wird. Dies ist hier beispielsweise im gesamten Zeitabschnitten vom Zeitpunkt t₁' bis zum Zeitpunkt t₄' der Fall. Dabei wird lediglich in den Zeitabschnitten zwischen den Zeitpunkten t₁' und t₂' sowie von t₃' bis t₄' jeweils eine Röntgendetektionsmessung durchgeführt. Es handelt sich bei zuletzt erwähnten Zeitabschnitten also um mehrere Messsequenzen zur Erstellung einer Computertomographieaufnahme.

Darüber hinaus kann die Zuführung der Konditionierungsstrahlung in der Variante B auch mit einem zeitlichen Vorlauf vor der ersten Messsequenz, z.B. morgens vor der ersten Inbetriebnahme des Geräts, erfolgen. In einem Zeitabschnitt der vom Zeitpunkt v₁' bis zum Zeitpunkt t₁' dauert, wird daher bereits Konditionierungsstrahlung dem Halbleiterdetektorelement zugeführt, während noch keine Röntgenmessung in einer Messsequenz durchgeführt wird. Die erste Messsequenz schließt zeitlich unmittelbar an den zeitlichen Vorlauf an, und der zeitliche Vorlauf könnte beispielsweise 10 Sekunden betragen, um eine definierte Konditionierung zu erreichen.

Die Bestimmung bzw. Steuerung oder Regelung des zeitlichen Vorlaufs kann auf einem Sollwert oder auch auf einem Überwachungsmesswert basieren, ebenso wie die Steuerung bzw. Regelung der Intensität bzw. das verwendete Spektrum der Konditionierungsstrahlung während des Vorlaufs oder auch der Messsequenz. Die Dauerbestrahlung wird besonders vorteilhaft mit Hilfe der beschriebenen Strahlungsquellen durchgeführt, die keine Röntgenstrahlung aussenden.

Weiterhin schließt die Variante B auch den nicht dargestellten Fall ein, dass die Konditionierungsstrahlung 24 Stunden, also quasi rund um die Uhr, zugeführt wird. Auch diese Dauerbestrahlung basiert auf einem Sollwert, sodass eine definierte Konditionierung der Halbleiterdetektorelemente erreicht werden kann.

Weiterhin könnte die zeitliche Steuerung gemäß einer weiteren Variante C so erfolgen, dass die Konditionierungsstrahlung, wie dies in Figur 4 dargestellt ist, in dem Moment deaktiviert wird, in dem die Röntgenbestrahlung einsetzt. Im Zeitabschnitt zwischen den Zeitpunkten t1'' und t2" wird Konditionierungsstrahlung K zugeführt, während keine zu detektierende Röntgenstrahlung R auf das Halbleiterdetektorelement trifft. Dies ist ebenso in dem Zeitabschnitt zwischen den Zeitpunkten t3" und t4'' der Fall. Unmittelbar mit dem Einsetzen der Röntgenbestrahlung zum Zeitpunkt t2" bzw. t4'' wird die Zuführung der Konditionierungsstrahlung jedoch gestoppt, sodass in den Zeitabschnitten zwischen den Zeitpunkten t2'' und t3'' bzw. t4'' und t5'' nur Röntgenstrahlung R detektiert wird, während die Zuführung der Konditionierungsstrahlung K gestoppt bzw. unterbrochen ist. Mit Hilfe diese Vorgehensweise kann sichergestellt werden, dass das Halbleiterdetektorelement immer eine Art der Bestrahlung und bevorzugt im Mittel über die Zeit stets die gleiche Wirkung durch die Bestrahlung bzw. Beleuchtung erfährt.

Wie mehrfach erwähnt, kann das Röntgendetektorsystem mit Hilfe der Erfindung an unterschiedliche Anforderungen der Röntgendetektion beispielsweise der Computertomographie angepasst werden.

Figur 5 zeigt ein Ausführungsbeispiel einer Steuerungseinheit 300 mit deren Hilfe eine Anpassung des Detektorsystems an verschiedene Bildgebungsanforderungen bzw. Detektionsanforderungen realisiert werden kann.

Wie bereits beschrieben, kann eine relativ komplexe Korrelationsfunktion erstellt werden, die der Steuerungseinheit 300 in diesem Ausführungsbeispiel mit Hilfe der Eingangsschnittstelle 310 übermittelt wird.

Erfindungsgemäß erfolgt die Steuerung oder Regelung der Zuführung der Konditionierungsstrahlung auf Basis eines oder mehrerer Sollwerte Tₐ, T_{b}, die beispielsweise gleichzeitig berücksichtigt werden können. Diese können z.B. von der erwähnten Sollwertspeichereinheit 400 an die Eingangsschnittstelle 310 übermittelt werden.

Ferner können Überwachungswerte Mₐ, die mit Hilfe einer Überwachungseinheit 160 gemessen werden, zur Steuerung oder Regelung und insbesondere zur Bildung einer Korrelationsfunktion herangezogen werden. Die Überwachungseinheit 160 kann dabei ebenfalls, wie bereits bezüglich Figur 2 beschrieben wurde, zur Vorgabe bzw. zur Messung eines Sollwerts T_{b} verwendet werden, um beispielsweise besagte Kalibrierung zu bestimmen.

Darüber hinaus können aber auch weitere Eingangsparameter CP von anderen Messsystemen 2 (wie z.B. Temperatursensoren etc.) an die Eingangsschnittstelle 310 übermittelt werden. Diese können beispielsweise auf innerhalb des Detektorsystems verfügbaren Parameterwerten, wie z.B. Stromaufnahme des Halbleiterdetektorelements oder Zählrate, beruhen. Insbesondere können die Eingangsparameter CP durch Messwerte oder abgeleitete Größen gebildet werden, die auf Umweltbedingungen oder auch innerhalb des Computertomographiesystems verfügbaren Messgrößen bzw. Daten beruhen. Beispielsweise kann mit einem Thermometer die Umgebungstemperatur bestimmt werden, mit einem Dosimeter die abgegebene Strahlung insbesondere die Röntgenstrahlung. Aber auch weitere Betriebsparameter, wie die Gesamtbetriebszeit des Detektorsystems oder des Computertomographiesystems bzw. auch der Strahlungsquellen, können Eingangsparameter CP bilden, die in einer komplexen Steuerung und/oder Regelung der Zuführung der Konditionierungsstrahlung berücksichtigt werden.

Messsysteme, wie beispielsweise die Überwachungseinheiten, oder auch andere nicht dem Detektorsystem zugeordnete Messsysteme können beispielsweise eine aktive Regelung der Bestrahlungsintensität der Halbleiterdetektorelemente unterstützen. Die Daten dieses Messsysteme können einen Sollwert Tₐ vorgeben, einen Eingangsparameter CP bilden, aber auch als Regelgröße einen einem Überwachungsmesswert Mₐ gleichkommenden Messwert an die Steuerungseinheit übermitteln.

Es ist dabei auch möglich, die Regelung bzw. Steuerung an die geplante Messung mit dem Computertomographiesystem anzupassen. Beispielsweise kann auf Basis der gewählten Röntgenintensitäten, des genutzten Röntgenspektrum und den zu erwartenden Schwächungen bzw. Signalstärken eine Zuführung der Konditionierungsstrahlung gesteuert oder auch geregelt werden. Insbesondere kann der Sollwert auf Basis dieser Größen ermittelt, gemessen bzw. vorgegeben werden und insbesondere ist eine Steuerung bzw. Regelung der Intensität bzw. spektralen Variation auf Basis dieser Größen angestrebt.

Weiterhin ist es auch möglich, die Historie der vergangenen Messungen in die Regelung bzw. Steuerung mit einzubeziehen und somit auch Alterungseffekte oder Hysterese- bzw. Gedächtniseffekte, insbesondere des Halbleiterdetektorelements, oder vorhandene Drifteffekte, wie später beschrieben, auszugleichen.

Wie bereits beschrieben, besteht die Möglichkeit, die Intensität der Konditionierungsstrahlung als Funktion der Zeit, der eingebrachten Dosis der Röntgenstrahlung, des gemessenen Detektionsstroms oder einer anderen Größe, wie z. B. Stromaufnahme, Laufzeit, Temperatur, oder aber auch der Feuchtigkeit zu steuern oder zu regeln.

Die zu erwartenden Schwächungen bzw. Signalstärken können beispielsweise insbesondere aus einer schnellen Übersichtsaufnahme, einem sogenannten Topogramm, abgeleitet werden. Dies ist insbesondere in Figur 6 genauer dargestellt.

Figur 6 zeigt ein CT-System 1 mit einer Röntgenstrahlungsquelle 10, der ein erfindungsgemäßes Detektorsystem 200 mit einer Steuerungseinheit und einer Strahlungsquelle zur Zuführung einer Konditionierungsstrahlung gegenüberliegend angeordnet ist. Zwischen der Röntgenstrahlungsquelle 10 und dem Detektorsystem 200 befindet sich ein Untersuchungsobjekt, Patient oder Proband O in einem Messraum M, um den für eine normale CT-Messung die Röntgenstrahlungsquelle 10 zusammen mit dem Detektorsystem 200 umläuft. In einem schnellen Übersichtsscan, der oft mit bezüglich des Drehwinkels feststehender Röntgenquelle und Detektor erstellt wird, werden zunächst sogenannte Topogrammdaten P erstellt, auf deren Basis eine vorteilhafte Auswahl eines Messprogramms für eine geplante CT-Untersuchung erfolgen kann. Die Topogrammdaten P sind dabei lediglich schematisch in dem in Figur 6 rechts stehenden Diagramm repräsentiert, welches die durch den Probanden O modulierte Intensität I(z) der Röntgenstrahlung R in Richtung der Raumrichtung z zeigt.

Dabei können insbesondere zu erwartende Schwächungswerte der Röntgenstrahlung abgeschätzt werden. Darauf basierend kann für eine geplante CT-Untersuchung die benötigte Detektorempfindlichkeit abgeschätzt bzw. geplant, also als Sollwerte vorgegeben werden. Bei einem etwas dünneren Patienten oder Probanden O mit geringeren Schwächungswerten wird beispielsweise eine höhere Zählrate benötigt als bei einem Dickeren, so dass in dem Detektorsystem die Steuerung so erfolgen kann, dass eine Konditionierung der Halbleiterdetektorelemente hinsichtlich einer maximalen Zählrate erfolgt, die einer benötigten Detektorempfindlichkeit gleichkommt. Die Zählrate (und damit die Detektorempfindlichkeit) bestimmt also den Sollwert der Steuerung und oder Regelung, sodass beispielsweise anfänglich in Kalibrierungsschritten gemäß Figur 2 eine Korrelation zwischen maximaler Zählrate und mA-Wert der Strahlungsquellen ermittelt werden kann. In diesem Fall würde man bevorzugt für eine dünnere Person O die Zuführung der Konditionierungsstrahlung mit einer hohen Konditionierungsstrahlungsintensität anstreben, da diese typischerweise mit einer hohen Detektorempfindlichkeit bzw. hohen maximalen Zählrate verbunden ist.

Mit Hilfe der Erfindung ist es demzufolge nicht nur möglich langfristige Effekte in der Konditionierung des Halbleiterdetektorelements zu verhindern oder zu kompensieren. Auch relativ kurzfristige Anpassungen an unterschiedlichste Anforderungen an das Detektorsystem können realisiert werden.

Wie angedeutet kann die Topogramm-Messung auch zur Auswahl eines Messprotokolls herangezogen werden. Die Information über die benötigte Detektorempfindlichkeit kann dabei auch im ausgewählten Messprotokoll berücksichtigt sein bzw. auf Basis des ausgewählten Messprotokolls oder bereits auf Basis der Auswahl des Messprotokolls abgeleitet werden. Es ist somit ebenfalls möglich auf Basis des Messprogramms eine maximale Zählrate als Sollwert vorzugeben, sodass die Konditionierungsstrahlung entsprechend einer benötigten Zählrate gesteuert oder auch geregelt werden kann. Die Steuerung und oder Regelung kann in diesem Fall dann beispielsweise hinsichtlich der Intensität oder auch spektralen Verteilung der Konditionierungsstrahlung erfolgen.

Insbesondere ist vorteilhaft, wenn der Detektor so konditioniert ist, dass ein Zählratendrift minimiert ist.

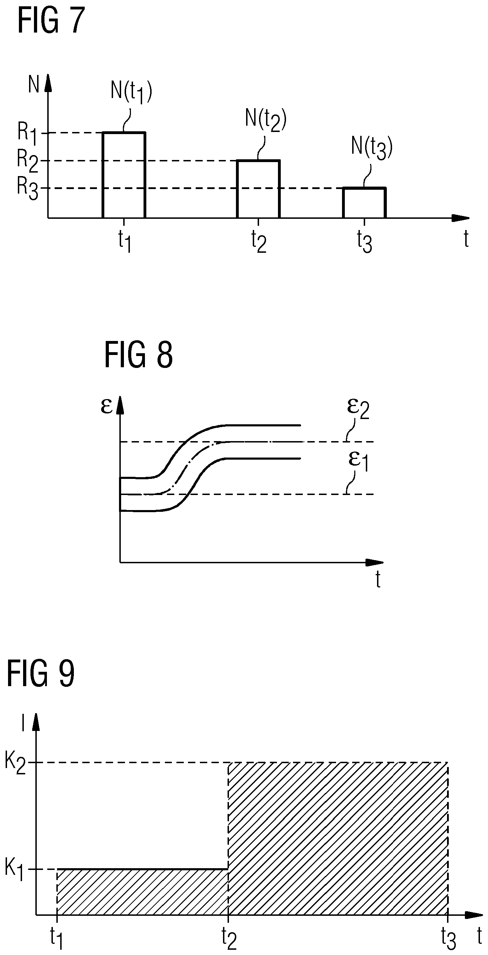

Figur 7 zeigt ein Beispiel für einen Zählratendrift. Bei einer konstanten Röntgendosis R₁ wird zu einem ersten Zeitpunkt t₁ eine Zählrate N(t₁) ermittelt. Zu einem späteren Zeitpunkt t₂ wird bei gleicher eingestrahlter Röntgendosis R₁ eine Zählrate N(t₂) ermittelt, die einer Röntgendosis R₂ entspricht, die niedriger ist als die tatsächlich eingestrahlte Röntgendosis R₁. Zu einem dritten Zeitpunkt t₃ wird wiederum eine dritte Zählrate N(t₃) ermittelt, die einer dritten Röntgendosis R₃ entspricht, die wiederum niedriger als die Röntgendosis R₂ und die tatsächlich eingestrahlte Röntgendosis R₁ ist. Das heißt, bei gleichbleibender Röntgendosis R₁ nimmt die Zählrate in diesem Ausführungsbeispiel eines Zählratendrifts ab. Umgekehrt ist es auch möglich, dass sich mit späterem Zeitpunkt die Zählrate zu größeren Werten hin verändert.

Es kann angestrebt werden, dass mit Hilfe der Zuführung der Konditionierungsstrahlung der Zählratendrift minimiert wird, bzw. ein Zählratendrift kompensiert wird. Dazu kann z. B. ein Sollwert vorgegeben werden, der einen bestimmte Zählrate für eine bestimmte Röntgendosis vorgibt. Der vorgebene Sollwert kann beispielsweise aus der Historie, d. h. aus den bisher durchgeführten Detektionsmessungen, aus der Betriebszeit des Detektors bzw. aufgrund der aus dem Betriebsverlauf des Detektors zu erwartenden Konditionierung ermittelt oder direkt gemessen werden.

Auf Basis der vorgegebenen Zählrate kann dann beispielsweise die Steuerung und/oder Regelung der Zufuhr der Konditionierungsstrahlung erfolgen, indem beispielsweise die Strahlungsintensität der Konditionierungsstrahlung erhöht oder ggf. erniedrigt wird, um den Zählratendrift auszugleichen. Dazu kann beispielsweise die mit Hilfe eines Dosimeters gemessene Röntgendosis ein Eingangsparameter für die Steuerungseinrichtung sein, mit dessen Hilfe dann, einem Überwachungsmesswert gleichkommend, ein Zählratendrift abgeschätzt und überprüft werden kann.

Figur 8 zeigt die Anpassung bzw. Steuerung und/oder Regelung der Zuführung der Konditionierungsstrahlung auf Basis des Energieverlaufs bzw. der Energieauswahl der Röntgenstrahlung. Dargestellt ist hier die Energie ε der eingestrahlten Röntgenstrahlung über der Zeit t. Bei einer bestimmten durchzuführenden CT-Aufnahme kann beispielsweise ein zeitlicher Verlauf der Energie der Röntgenstrahlung vorgegeben werden. In dem dargestellten Ausführungsbeispiel wird Röntgenstrahlung einer bestimmten spektralen Breite, deren Mittelwert zuerst um eine erste Energie ε₁ schwankt, zu einer Röntgenenergie verändert mit identischer spektraler Breite, die aber um einen höheren Mittelwert ε₂ schwankt. Dies kann wiederum in der benötigten Empfindlichkeit des Röntgendetektors und insbesondere in einer notwendigen Zählrate berücksichtigt werden, so dass die Steuerung und/oder Regelung der Zuführung der Konditionierungsstrahlung auf Basis des Energieverlaufs der Röntgenstrahlungsquelle erfolgen kann. Beispielsweise kann dieser Energieverlauf implizit durch ein Messprotokoll vorgegeben und der Sollwert dann durch eine maximal benötigte Zählrate gegeben sein.

D. h. insbesondere im Hinblick auf die mit Hilfe der Figuren 6 bis 8 beschriebenen Möglichkeiten, kann die Steuerung der Zuführung der Konditionierungsstrahlung aus gewählten Röntgenintensitäten, dem genutzten Röntgenspektrum (d.h. der spektralen Bandbreite der Röntgenstrahlung) und der zu erwartenden Schwächungen bzw. Signalstärken errechnet werden. Ebenso ist möglich, dass eine vorgegebene Steuerungs- bzw. Regelungssequenz, insbesondere mit mehreren Zielwerten für bestimmte Messprotokolle bzw. Messsequenzen des Computertomographiegeräts, beispielsweise in dem Sollwertspeicher hinterlegt wird und dem Messprotokoll bzw. der Messsequenz zugeordnet wird. Bevorzugt erfolgt dies für jede der in dem betreffenden Gerät möglichen Röntgendetektionsmessungen.

Dabei ist zu betonen, dass auf Basis des Messprotokolls der aktuelle Bestrahlungszustand des Halbleiterdetektorelements abgeschätzt werden kann, und diese Information in eine Regelung mit einbezogen werden kann. D.h. es ist möglich, Belastungen durch Röntgenstrahlung bzw. Betriebserfordernisse des Halbleiterdetektorelements im Voraus abzuschätzen, wenn die eingestellten Messparameter (d.h. das Messprotokoll) und evtl. Vorkenntnis über das Untersuchungsobjekt beispielsweise durch eine Übersichtsaufnahme (Topogramm-Messung) in die Abschätzung einfließen. Somit ist es beispielsweise möglich, Lastsprünge (d.h. Veränderungen, die z.B. durch plötzliche Verlagerung eines Untersuchungsobjekts relativ zum Detektor auftreten) weitgehend zu eliminieren und entsprechende Auswirkungen auf die Eigenschaften des Detektorsystems zur Detektion von Röntgenstrahlung entsprechend zu minimieren. Dies kann zu einer zeitlich konstanten, von der eingebrachten Röntgendosis unabhängigen, Detektorantwort (bzw. dem damit zusammenhängenden Detektionssignal) führen, sodass beispielsweise die Bildqualität einer Computertomographiemessung gesteigert werden kann.

Wie bereits erläutert, kann die Regelung und Steuerung auf Basis variabler Sollwerte erfolgen, d.h. es werden Sollwerte einer bestimmten Größe in zeitlicher Folge mit unterschiedlichen Werten vorgegeben (d.h. als eine Folge von Zielwerten)

Figur 9 zeigt ein entsprechendes Ausführungsbeispiel. Dargestellt ist hier die Intensität I der Konditionierungsstrahlung über der Zeit t. Im Messzeitraum zwischen den Zeitpunkten t₁ und t₂ ist ein erster Sollwert vorgegeben, der die Zuführung einer ersten Konditionierungsstrahlungsintensität K₁ steuert, und im Messzeitraum zwischen den Zeitpunkten t₂ und t₃ ist ein Zielwert vorgegeben, der die Zuführung einer zweiten Konditionierungsstrahlungsintensität K₂ steuert. Dabei ist hervorzuheben, dass beispielsweise innerhalb eines zusammenhängenden Messzeitraums bzw. einer zusammenhängenden Messsequenz zwischen verschiedenen Sollwerten variiert werden kann.

Es wird abschließend ebenfalls darauf hingewiesen, dass es sich bei dem vorhergehend detailliert beschriebenen Röntgendetektor, Röntgendetektorsystem und Computertomographiesystem lediglich um Ausführungsbeispiele handelt, welche vom Fachmann in verschiedenster Weise modifiziert werden können, ohne den Bereich der Erfindung zu verlassen. Insbesondere ist darauf hinzuweisen, dass die Merkmale sämtlicher Ausführungsbeispiele oder in Figuren offenbarter Weiterbildungen in beliebiger Kombination verwendet werden können. Weiterhin schließt die Verwendung der unbestimmten Artikel "ein" bzw. "eine" nicht aus, dass die betreffenden Merkmale auch mehrfach vorhanden sein können. Ebenso schließt der Begriff "Einheit" nicht aus, dass die betreffenden Komponenten aus mehreren zusammenwirkenden Teil-Komponenten bestehen, die gegebenenfalls auch räumlich verteilt sein können.

## Patentansprüche

1. Verfahren zur Detektion von Röntgenstrahlung (R),
mit einem Röntgendetektor (100), welcher ein direktkonvertierendes Halbleiterdetektorelement (150ₐ, 150_{b}) aufweist,
wobei dem Halbleiterdetektorelement (150ₐ, 150_{b}) mit Hilfe einer Strahlungsquelle (10, 210, 210ₐ, 210_{b}) zusätzliche Strahlung (K) zugeführt wird,
und die Zuführung der zusätzlichen Strahlung (K) basierend auf wenigstens einem vorgegebenen Sollwert (Tₐ, T_{b}, T_{c}) gesteuert und/oder geregelt wird,
**dadurch gekennzeichnet, dass** die Zuführung der zusätzlichen Strahlung (K) so gesteuert und/oder geregelt wird, dass die Stromaufnahme der Halbleiterdetektorelemente (150ₐ, 150_{b}) und/oder einer Gruppe von Halbleiterdetektorelementen (150ₐ, 150_{b}) im Wesentlichen konstant ist.

2. Verfahren nach Anspruch 1, wobei die Strahlungsquelle (210, 210ₐ, 210_{b}) wenigstens eine Komponente aus der Gruppe UV-Lichtquelle, IR-Lichtquelle, Lichtquelle für sichtbares Licht, vorzugsweise eine Leuchtdiode, einen Laser, eine Halogenlampe, eine Leuchtstoffröhre umfasst.

3. Verfahren nach Anspruch 1 oder 2, wobei die Strahlungsquelle (10) die Röntgenstrahlungsquelle (10) umfasst.

4. Verfahren nach einem der Ansprüche 1 bis 3, wobei die Zuführung der zusätzlichen Strahlung (K) zeitlich und/oder hinsichtlich der Strahlungsdichte und/oder hinsichtlich der Energie gesteuert und/oder geregelt wird.

5. Verfahren nach einem der Ansprüche 1 bis 4, wobei ein zu dem wenigstens einen Sollwert (Tₐ, T_{b}, T_{c}) korrespondierender Überwachungsmesswert (Mₐ, M_{b}, M_{c}) erfasst wird.

6. Verfahren nach Anspruch 5, wobei eine Überwachungseinheit (160, 160ₐ, 160_{b}, 160_{c}) zur Erfassung des Überwachungsmesswerts (Mₐ, M_{b}, M_{c}) wenigstens eine Komponente aus der Gruppe
- Lichtsensor,
- Röntgensensor,
- Halbleiterdetektorelement (150ₐ, 150_{b}) des Röntgendetektors,
- Auswertelektronik des Röntgendetektors,
- Dosimeter,
- Thermometer,
- Luxmeter
umfasst.

7. Verfahren nach einem der Ansprüche 1 bis 6, wobei die Zuführung der zusätzlichen Strahlung (K) basierend auf der Beschaffenheit eines Untersuchungsobjekts (O), welches mit der zu detektierenden Röntgenstrahlung (R) zu durchstrahlen ist, gesteuert und/oder geregelt wird.

8. Verfahren nach einem der Ansprüche 1 bis 7, wobei die Zuführung der zusätzlichen Strahlung (K) basierend auf dem Verlauf der Abgabe der Röntgenstrahlung (R) durch die Röntgenstrahlungsquelle (10) und/oder der Schwächung der Röntgenstrahlung (R) der Röntgenstrahlungsquelle (10) durch das Untersuchungsobjekts (O) gesteuert und/oder geregelt wird.

9. Verfahren nach einem der Ansprüche 1 bis 8, wobei die Zuführung der zusätzlichen Strahlung (K) basierend auf einem Zählratendrift gesteuert und/oder geregelt wird.

10. Verfahren nach einem der Ansprüche 1 bis 9, wobei die Zuführung der zusätzlichen Strahlung (K) auf Basis wenigstens einer der Größen
- Bestrahlungszeit,
- eingebrachter Dosis,
- Wert oder Verlauf des Detektionssignals,
- Gesamtbetriebszeit des Detektors,
- Temperatur,
- Feuchtigkeit,
- Stromaufnahme eines Halbleiterdetektorelements (150ₐ, 150_{b}),
- Stromaufnahme einer Gruppe von Halbleiterdetektorelementen (150ₐ, 150_{b}),
erfolgt.

11. Verfahren nach einem der Ansprüche 1 bis 10, wobei die zusätzliche Strahlung (K) in einem Zeitfenster zugeführt wird, in dem die Röntgenstrahlungsquelle keine Röntgenstrahlung (R) abgibt.

12. Verfahren nach einem der Ansprüche 1 bis 10, wobei die zusätzliche Strahlung (K) während der gesamten Betriebszeit des Röntgendetektors (100) zugeführt wird.

13. Röntgendetektorsystem (200) mit
- einem Röntgendetektor (100) zur Erfassung von Strahlung einer Röntgenquelle (10), welcher ein direktkonvertierendes Halbleiterdetektorelement (150ₐ, 150_{b}) aufweist,
- einer Strahlungsquelle (210, 210ₐ, 210_{b}) zur Zuführung von zusätzlicher Strahlung (K)zu dem Halbleiterdetektorelement (150ₐ, 150_{b}) und/oder einer Steuerschnittstelle, zur Ansteuerung einer Strahlungsquelle (10),
- einer Steuerungseinheit (300), welche auf Basis wenigstens eines vorgegebenen Sollwerts (Tₐ, T_{b}, T_{c}) die Zuführung der zusätzlichen Strahlung steuert und/oder regelt,
**dadurch gekennzeichnet, dass** die Zuführung der zusätzlichen Strahlung (K) so steuerbar und/oder regelbar ist, dass die Stromaufnahme der Halbleiterdetektorelemente (150ₐ, 150_{b}) und/oder einer Gruppe von Halbleiterdetektorelementen (150ₐ, 150_{b}) im Wesentlichen konstant ist.

14. Röntgendetektorsystem nach Anspruch 13, mit einer Überwachungseinheit (160, 160ₐ, 160_{b}, 160_{c}) zur Erfassung eines zu dem wenigstens einen Sollwert (Tₐ, T_{b}, T_{c}) korrespondierenden Überwachungsmesswerts (Mₐ, M_{b}, M_{c}).

15. Röntgendetektorsystem nach Anspruch 14, wobei die Überwachungseinheit (160, 160ₐ, 160_{b}, 160_{c}) außerhalb eines Primärstrahlengangs der Röntgenquelle (10) zu dem Halbleiterdetektorelement (150ₐ, 150_{b}) angeordnet ist.

16. Röntgendetektorsystem nach einem der Ansprüche 14 oder 15, wobei die Überwachungseinheit (160a, 160b, 160c) Abschirmungsmittel gegenüber Strahlung der Röntgenquelle (10) aufweist.

17. Röntgendetektorsystem nach einem der Ansprüche 14 bis 16, wobei die Überwachungseinheit (160ₐ, 160_{b}) in den Röntgendetektor (100) integriert ist.

18. Computertomographiesystem (1) mit einem Röntgendetektorsystem (200) nach einem der Ansprüche 13 bis 16.

## Claims

1. Method for detecting x-ray radiation (R) by means of an x-ray detector (100) which has a direct-conversion semiconductor detector element (150ₐ, 150_{b}),
wherein additional radiation (K) is supplied to the semiconductor detector element (150ₐ, 150_{b}) with the aid of a radiation source (10, 210, 210ₐ, 210_{b}),
and the supply of the additional radiation (K) is controlled and/or regulated based on at least one specified nominal value (Tₐ, T_{b}, T_{c}),
**characterised in that** the supply of the additional radiation (K) is controlled and/or regulated in such a way that the current consumption of the semiconductor detector elements (150ₐ, 150_{b}) and/or of a group of semiconductor detector elements (150ₐ, 150_{b}) is substantially constant.

2. Method according to claim 1, wherein the radiation source (210, 210ₐ, 210_{b}) comprises at least one component from the group UV light source, IR light source, light source for visible light, preferably a light-emitting diode, a laser, a halogen lamp, a tubular fluorescent lamp.

3. Method according to claim 1 or 2, wherein the radiation source (10) comprises the x-ray source (10).

4. Method according to one of claims 1 to 3, wherein the supply of the additional radiation (K) is controlled and/or regulated with respect to time and/or with respect to the radiation density and/or with respect to the energy.

5. Method according to one of claims 1 to 4, wherein a monitoring measured value (Mₐ, M_{b}, M_{c}) corresponding to the at least one nominal value (Tₐ, T_{b}, T_{c}) is acquired.

6. Method according to claim 5, wherein a monitoring unit (160, 160ₐ, 160_{b}, 160_{c}) for acquiring the monitoring measured value (Mₐ, M_{b}, M_{c}) comprises at least one component from the group
- light sensor,
- x-ray sensor,
- semiconductor detector element (150ₐ, 150_{b}) of the x-ray detector,
- evaluation electronics of the x-ray detector,
- dosimeter,
- thermometer,
- luxmeter.

7. Method according to one of claims 1 to 6, wherein the supply of the additional radiation (K) is controlled and/or regulated based on the characteristics of an examination subject (O) which is to be transradiated by the x-ray radiation (R) that is to be detected.

8. Method according to one of claims 1 to 7, wherein the supply of the additional radiation (K) is controlled and/or regulated based on the characteristic curve of the emission of the x-ray radiation (R) by means of the x-ray source (10) and/or on the attenuation of the x-ray radiation (R) of the x-ray source (10) by the examination subject (O).

9. Method according to one of claims 1 to 8, wherein the supply of the additional radiation (K) is controlled and/or regulated based on a count rate drift.

10. Method according to one of claims 1 to 9, wherein the supply of the additional radiation (K) is effected on the basis of at least one of the variables
- irradiation time,
- administered dose,
- value or characteristic curve of the detection signal,
- total operating time of the detector,
- temperature,
- humidity,
- current consumption of a semiconductor detector element (150ₐ, 150_{b}),
- current consumption of a group of semiconductor detector elements (150ₐ, 150_{b}) .

11. Method according to one of claims 1 to 10, wherein the additional radiation (K) is supplied in a time window in which the x-ray source emits no x-ray radiation (R).

12. Method according to one of claims 1 to 10, wherein the additional radiation (K) is supplied during the entire operating time of the x-ray detector (100).

13. X-ray detector system (200) comprising
- an x-ray detector (100) for detecting radiation of an x-ray source (10) which has a direct-conversion semiconductor detector element (150ₐ, 150_{b}),
- a radiation source (210, 210ₐ, 210_{b}) for supplying additional radiation (K) to the semiconductor detector element (150ₐ, 150_{b}) and/or a control interface for driving a radiation source (10),
- a control unit (300) which controls and/or regulates the supply of the additional radiation on the basis of at least one specified nominal value (Tₐ, T_{b}, T_{c}),
**characterised in that** the supply of the additional radiation (K) can be controlled and/or regulated in such a way that the current consumption of the semiconductor detector elements (150ₐ, 150_{b}) and/or of a group of semiconductor detector elements (150ₐ, 150_{b}) is substantially constant.

14. X-ray detector system according to claim 13, having a monitoring unit (160, 160ₐ, 160_{b}, 160_{c}) for acquiring a monitoring measured value (Mₐ, M_{b}, M_{c}) corresponding to the at least one nominal value (Tₐ, T_{b}, T_{c}).

15. X-ray detector system according to claim 14, wherein the monitoring unit (160, 160ₐ, 160_{b}, 160_{c}) is arranged outside of a primary beam path of the x-ray source (10) to the semiconductor detector element (150ₐ, 150_{b}).

16. X-ray detector system according to one of claims 14 or 15, wherein the monitoring unit (160ₐ, 160_{b}, 160_{c}) has shielding means to protect against radiation of the x-ray source (10).

17. X-ray detector system according to one of claims 14 to 16, wherein the monitoring unit (160ₐ, 160_{b}) is integrated into the x-ray detector (100).

18. Computed tomography system (1) having an x-ray detector system (200) according to one of claims 13 to 16.

## Revendications

1. Procédé de détection de rayonnement X (R), comprenant un détecteur (100) de rayons X, qui a un élément (150a, 150_{b}) de détecteur à semi-conducteur à transformation directe, dans lequel on envoie, à l'élément (150ₐ, 150_{b}) de détecteur à semi-conducteur, un rayonnement (K) supplémentaire à l'aide d'une source (10, 210, 210ₐ, 210_{b}) de rayonnement,
et l'on commande et/ou on règle l'envoi du rayonnement (K) supplémentaire sur la base d'au moins une valeur (Tₐ, T_{b}, T_{c}) de consigne donnée à l'avance,
**caractérisé en ce que** l'on commande et/ou on règle l'envoi du rayonnement (K) supplémentaire de manière à ce que l'absorption de courant des éléments (150ₐ, 150_{b}) de détecteur à semi-conducteur et/ou d'un groupe d'éléments (150ₐ, 150_{b}) de détecteur à semi-conducteur soit sensiblement constante.

2. Procédé suivant la revendication 1, dans lequel la source (210, 210ₐ, 210_{b}) de rayonnement comprend au moins un élément du groupe source de lumière UV, source de lumière IR, source de lumière visible, de préférence une diode électroluminescente, un laser, une lampe halogène, une lampe fluorescente.

3. Procédé suivant la revendication 1 ou 2, dans lequel la source (10) de rayonnement comprend la source (10) de rayons X.

4. Procédé suivant l'une des revendications 1 à 3, dans lequel on commande et/ou on règle l'envoi du rayonnement (K) supplémentaire en fonction du temps et/ou du point de vue de l'intensité du rayonnement et/ou du point de vue de l'énergie.

5. Procédé suivant l'une des revendications 1 à 4, dans lequel on détecte une valeur (Mₐ, M_{b}, M_{c}) de contrôle correspondant à la au moins une valeur (Tₐ, T_{b}, T_{c}) de consigne.

6. Procédé suivant la revendication 5, dans lequel une unité (160, 160ₐ, 160_{b}, 160_{c}) de contrôle pour la détection de la valeur (Mₐ, M_{b}, M_{c}) de contrôle comprend au moins un élément du groupe
- capteur de lumière,
- capteur de rayons X,
- élément (150ₐ, 150_{b}) détecteur à semi-conducteur du détecteur à rayons X,
- électronique d'exploitation du détecteur à rayons X,
- dosimètre,
- thermomètre,
- luxmètre.

7. Procédé suivant l'une des revendications 1 à 6, dans lequel on commande et/ou on règle l'envoi du rayonnement (K) supplémentaire sur la base de la nature d'un objet (O) à examiner, qui est traversé par le rayonnement X (R) à détecter.

8. Procédé suivant l'une des revendications 1 à 7, dans lequel on commande et/ou on règle l'envoi du rayonnement (K) supplémentaire sur la base de la courbe de l'émission du rayonnement X (R) par la source (10) de rayons X et/ou de l'affaiblissement du rayonnement X (R) de la source (10) de rayons X par l'objet (O) à examiner.

9. Procédé suivant l'une des revendications 1 à 8, dans lequel on commande et/ou on règle l'envoi du rayonnement (K) supplémentaire sur la base d'une dérive de taux de comptage.

10. Procédé suivant l'une des revendications 1 à 9, dans lequel l'envoi du rayonnement (K) supplémentaire a lieu sur la base d'au moins l'une des grandeurs
- temps d'exposition,
- dose administrée,
- valeur ou courbe du signal de détection,
- temps de fonctionnement total du détecteur,
- température,
- humidité,
- absorption de courant d'un élément (150ₐ, 150_{b}) de détecteur à semi-conducteur,
- absorption de courant d'un groupe d'éléments (150ₐ, 150_{b}) de détecteur à semi-conducteur.

11. Procédé suivant l'une des revendications 1 à 10, dans lequel on envoie le rayonnement (K) supplémentaire dans un créneau temporel dans lequel la source de rayons X n'émet pas de rayonnement X (R).

12. Procédé suivant l'une des revendications 1 à 10, dans lequel on envoie le rayonnement (K) supplémentaire pendant toute la durée de fonctionnement du détecteur (100) de rayons X.

13. Système (200) à détecteur de rayons X, comprenant
- un détecteur (100) de rayons X pour la détection du rayonnement d'une source (10) de rayons X, qui a un élément (150ₐ, 150_{b}) de détecteur à semi-conducteur à transformation directe,
- une source (210, 210ₐ, 210_{b}) de rayonnement pour l'envoi de rayonnement (K) supplémentaire à l'élément (150ₐ, 150_{b}) de détecteur à semi-conducteur et/ou à une interface de commande, pour l'excitation d'une source (10) de rayonnement, - une unité (300) de commande, qui commande et/ou règle l'envoi du rayonnement supplémentaire sur la base d'au moins une valeur (Tₐ, T_{b}, T_{c}) de consigne donnée à l'avance,
**caractérisé en ce que** l'envoi du rayonnement (K) supplémentaire peut être commandé et/ou réglé de manière à ce que l'absorption de courant des éléments (150ₐ, 150_{b}) de détecteur à semi-conducteur et/ou d'un groupe d'éléments (150ₐ, 150_{b}) de détecteur à semi-conducteur soit sensiblement constante.

14. Système à détecteur de rayons X suivant la revendication 13, comprenant une unité (160, 160ₐ, 160_{b}, 160_{c}) de contrôle pour la détection d'une valeur (Mₐ, M_{b}, M_{c}) de contrôle correspondant à la au moins une valeur (Tₐ, T_{b}, T_{c}) de consigne.

15. Système à détecteur de rayons X suivant la revendication 14, dans lequel l'unité (160, 160ₐ, 160_{b}, 160_{c}) de contrôle est disposée à l'extérieur d'un trajet de rayonnement primaire de la source (10) de rayons X à l'élément (150ₐ, 150_{b}) de détecteur à semi-conducteur.

16. Système à détecteur de rayons X suivant l'une des revendications 14 ou 15, dans lequel l'unité (160ₐ, 160_{b}, 160_{c}) de contrôle a des moyens de protection vis-à-vis du rayonnement de la source (10) de rayons X.

17. Système à détecteur de rayons X suivant l'une des revendications 14 à 16, dans lequel l'unité (160ₐ, 160_{b}) de contrôle est intégrée au détecteur (100) à rayons X.

18. Système (1) de tomodensitographie assisté par ordinateur, comprenant un système (200) à détecteur de rayons X suivant l'une des revendications 13 à 16.
